(19) Europäisches Patentamt / European Patent Office / Office européen des brevets

(11) **EP 4 614 852 A1**

(12) **EUROPEAN PATENT APPLICATION**
published in accordance with Art. 153(4) EPC

(43) Date of publication:
**10.09.2025   Bulletin 2025/37**

(21) Application number: **22963936.4**

(22) Date of filing: **03.11.2022**

(51) International Patent Classification (IPC):
*H04L 5/00* *(2006.01)*

(52) Cooperative Patent Classification (CPC):
**H04L 5/00**

(86) International application number:
**PCT/CN2022/129577**

(87) International publication number:
**WO 2024/092625 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• ZHANG, Shichang
  Dongguan, Guangdong 523860 (CN)
• MA, Teng
  Dongguan, Guangdong 523860 (CN)

(74) Representative: **RGTH
Patentanwälte PartGmbB
Neuer Wall 10
20354 Hamburg (DE)**

(54)   **WIRELESS COMMUNICATION METHOD AND APPARATUS**

(57)   The present application provides a wireless communication method and apparatus. The method comprises: if a first SL PRS resource indicated by a first terminal device is in a conflict, a second terminal device sends first conflict indication information to a target terminal device, wherein the target terminal device is the first terminal device or a third terminal device, and the third terminal device is a terminal device having a sidelink transmission resource that conflicts with the first SL PRS resource.

```
┌─────────────────┐              ┌─────────────────┐
│  First terminal │              │ Second terminal │
│     device      │              │     device      │
└────────┬────────┘              └────────┬────────┘
         │                                │
         │  S1410: First conflict         │
         │◄─────indication information─────│
         │                                │
         │                                │
```

FIG. 14

EP 4 614 852 A1

## Description

### TECHNICAL FIELD

This application relates to the field of communications technologies, and more specifically, to a wireless communication method and an apparatus.

### BACKGROUND

A terminal device may independently select an SL PRS resource. In this selection manner, how to improve an SL PRS transmission function is an urgent problem to be solved at present.

### SUMMARY

This application provides a wireless communication method and an apparatus. The following describes the aspects related to this application.

According to a first aspect, there is provided a wireless communication method. The wireless communication method includes: in a case that there is a conflict with a first SL PRS resource indicated by a first terminal device, transmitting, by a second terminal device, first conflict indication information to a target terminal device, where the target terminal device is the first terminal device or a third terminal device, and the third terminal device is a terminal device whose sidelink transmission resource conflicts with the first SL PRS resource.

According to a second aspect, there is provided a wireless communication method. The wireless communication method includes: receiving, by a target terminal device, first conflict indication information transmitted by a second terminal device, where the first conflict indication information is transmitted in a case in which there is a conflict with the first SL PRS resource indicated by a first terminal device, where the target terminal device is the first terminal device or a third terminal device, and the third terminal device is a terminal device whose sidelink transmission resource conflicts with the first SL PRS resource.

According to a third aspect, there is provided a terminal device. The terminal device is a second terminal device, and the terminal device includes: a transmitting unit, configured to: in a case that there is a conflict with a first SL PRS resource indicated by a first terminal device, transmit first conflict indication information to a target terminal device, where the target terminal device is the first terminal device or a third terminal device, and the third terminal device is a terminal device whose sidelink transmission resource conflicts with the first SL PRS resource.

According to a fourth aspect, there is provided a terminal device. The terminal device is a target terminal device, and the terminal device includes: a receiving unit, configured to receive first conflict indication information transmitted by a second terminal device, where the first conflict indication information is transmitted in a case in which there is a conflict with the first SL PRS resource indicated by a first terminal device, where the target terminal device is the first terminal device or a third terminal device, and the third terminal device is a terminal device whose sidelink transmission resource conflicts with the first SL PRS resource.

According to a fifth aspect, there is provided a terminal device. The terminal device includes a processor, a memory, and a communications interface, where the memory is configured to store one or more computer programs, and the processor is configured to invoke the computer program in the memory to cause the terminal device to perform some or all of the steps in the method according to the first aspect or the second aspect.

According to a sixth aspect, there is provided an apparatus. The apparatus includes a processor, configured to invoke a program from a memory to cause the apparatus to perform some or all of the steps in the method according to the first aspect or the second aspect.

According to a seventh aspect, there is provided a chip. The chip includes a processor, configured to invoke a program from a memory to cause a device on which the chip is installed to perform some or all of the steps in the method according to the first aspect or the second aspect.

According to an eighth aspect, there is provided a computer-readable storage medium. The computer-readable storage medium stores a program that causes a computer to perform some or all of the steps in the method according to the first aspect or the second aspect.

According to a ninth aspect, there is provided a computer program product. The computer program product includes a program that causes a computer to perform some or all of the steps in the method according to the first aspect or the second aspect.

According to a tenth aspect, there is provided a computer program. The computer program causes a computer to perform some or all of the steps in the method according to the first aspect or the second aspect.

When there is a conflict with an SL PRS resource, the second terminal device may transmit a conflict indication for the SL PRS resource, thereby being conducive to avoiding the conflict with the SL PRS resource and thus improving SL PRS transmission performance.

## BRIEF DESCRIPTION OF DRAWINGS

FIG. 1 is an example diagram of a system architecture of a wireless communications system to which embodiments of this application are applicable.

FIG. 2 is an example diagram of a scenario of sidelink communication within network coverage.

FIG. 3 is an example diagram of a scenario of sidelink communication with partial network coverage.

FIG. 4 is an example diagram of a scenario of sidelink communication outside network coverage.

FIG. 5 is an example diagram of a scenario of sidelink communication based on a central control node.

FIG. 6 is a schematic diagram of a listening-based resource selection method in a sidelink communication system.

FIG. 7 is an example diagram of a broadcast-based sidelink communication mode.

FIG. 8 is an example diagram of a unicast-based sidelink communication mode.

FIG. 9 is an example diagram of a multicast-based sidelink communication mode.

FIG. 10 shows a frame structure of a system frame that carries no PSFCH.

FIG. 11 shows a frame structure of a system frame that carries a PSFCH.

FIG. 12 is a schematic diagram of hidden nodes.

FIG. 13 is a schematic diagram of exposed terminals.

FIG. 14 is a schematic flowchart of a wireless communication method according to an embodiment of this application.

FIG. 15 shows a system structure in which a PSFCH is carried and no PSFCH is carried according to an embodiment of this application.

FIG. 16 is a schematic block diagram of a terminal device according to an embodiment of this application.

FIG. 17 is a schematic block diagram of another terminal device according to an embodiment of this application.

FIG. 18 is a schematic structural diagram of an apparatus according to an embodiment of this application.

## DESCRIPTION OF EMBODIMENTS

Technical solutions in this application are described below with reference to the accompanying drawings.

### Communications system architecture

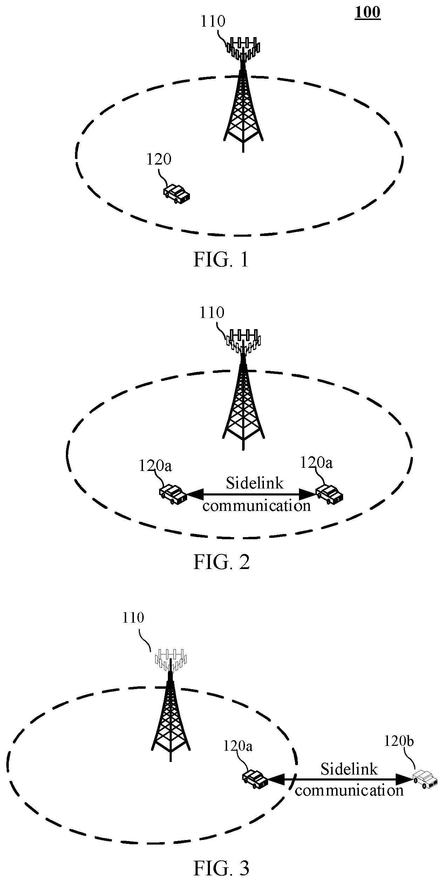

FIG. 1 is an example diagram of a system architecture of a wireless communications system 100 to which an embodiment of this application is applicable. The wireless communications system 100 may include a network device 110 and terminal devices 120. The network device 110 may be a device that communicates with the terminal device 120. The network device 110 may provide communication coverage for a specific geographic area, and may communicate with the terminal device 120 located within the coverage.

FIG. 1 shows one network device and one terminal device as an example. Optionally, the wireless communications system 100 may include one or more network devices 110, and/or one or more terminal devices 120. For a network device 110, the one or more terminal devices 120 may be located within network coverage of the network device 110, or may be located outside network coverage of the network device 110, or may be located partially within the network coverage of the network device 110, and may be located partially outside the network coverage of the network device 110, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal device, a mobile device, a user terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a vehicle, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in smart city (smart city), a wireless terminal in smart home (smart home), or the like. For example, the terminal device may serve as a scheduling entity that provides a sidelink signal between terminal devices in vehicle-to-everything (vehicle-to-everything, V2X), device-to-device (device-to-device, D2D) communications, or the like. For example, a cellular phone and a vehicle communicate with each other through a sidelink signal. A cellular phone and a smart home device communicate with each other, without relaying a communication signal through a base station. Optionally, the terminal device may function as a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names below, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master MeNB, a secondary SeNB, a multi-standard radio (MSR) node, a home base station, a network controller, an access node, a wireless node, an access point (access piont, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, V2X, or machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary, or may be mobile. For example, a helicopter or an unmanned aerial vehicle may be configured to function as a mobile base station, and one or more cells may move depending on a location of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

**Sidelink communication in different network coverage statuses**

Sidelink communication means a sidelink-based communication technology. The sidelink communication may be, for example, device to device (device to device, D2D) or vehicle to everything (vehicle to everything, V2X) communication. Communication data in a conventional cellular system is received or transmitted between a terminal device and a network device, while sidelink communication supports direct communication data transmission between terminal devices. Compared with conventional cellular communication, direct transmission of communication data between terminal devices may have higher spectral efficiency and a lower transmission delay. For example, a vehicle-to-everything system uses a sidelink communication technology.

Sidelink communication may be classified, depending on a network coverage status of the terminal device, into sidelink communication within network coverage, sidelink communication with partial network coverage, and sidelink communication outside network coverage.

FIG. 2 is an example diagram of a scenario of sidelink communication within network coverage. In the scenario shown in FIG. 2, both the two terminal devices 120a are located within coverage of the network device 110. Therefore, both the two terminal devices 120a may receive configuration signalling (where the configuration signalling in this application may alternatively be replaced with configuration information) from the network device 110, and determine a sidelink configuration based on the configuration signalling from the network device 110. After performing sidelink configuration, both the two terminal devices 120a may perform sidelink communication on a sidelink.

FIG. 3 is an example diagram of a scenario of sidelink communication with partial network coverage. In the scenario shown in FIG. 3, a terminal device 120a performs sidelink communication with a terminal device 120b. The terminal device 120a is located within coverage of a network device 110. Therefore, the terminal device 120a can receive configuration signalling from the network device 110, and determine a sidelink configuration based on the configuration signalling from the network device 110. The terminal device 120b is located outside network coverage, and cannot receive the configuration signalling from the network device 110. In this case, the terminal device 120b may determine a sidelink configuration based on pre-configuration (pre-configuration) information and/or information that is carried on a physical sidelink broadcast channel (physical sidelink broadcast channel, PSBCH) transmitted by the terminal device 120a located within the network coverage. After performing sidelink configuration, both the terminal device 120a and the terminal device 120b may perform sidelink communication on a sidelink.

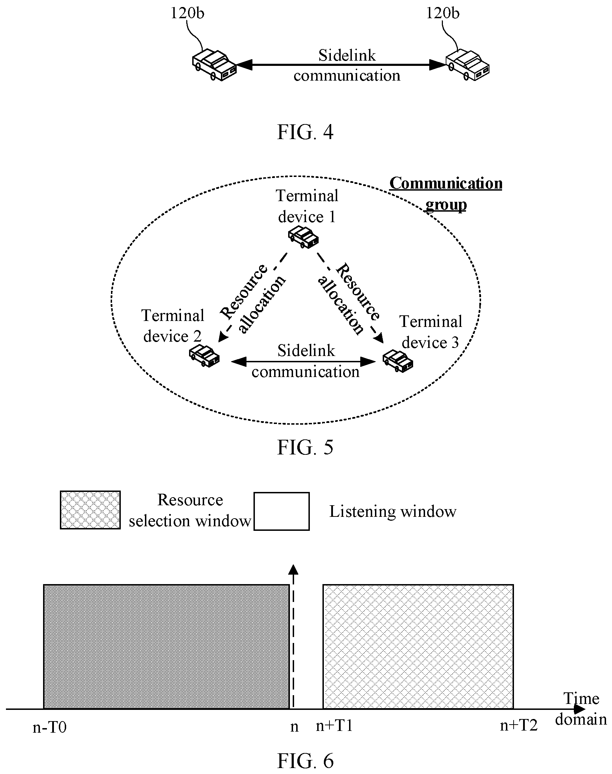

FIG. 4 is an example diagram of a scenario of sidelink communication outside network coverage. In the scenario shown in FIG. 4, two terminal devices 120b are both located outside network coverage. In this case, both the two terminal devices 120b may determine a sidelink configuration based on pre-configuration information. After performing sidelink configuration, both the two terminal devices 120b may perform sidelink communication on a sidelink.

## Sidelink communication based on a central control node

FIG. 5 is an example diagram of a scenario of sidelink communication associated with a central control node. In the scenario of sidelink communication, a plurality of terminal devices may form a communication group, and the communication group has a central control node. The central control node may be a terminal device (for example, a terminal device 1 in FIG. 5) in the communication group, and the terminal device may also be referred to as a cluster header (cluster header, CH) terminal device. The central control node may be responsible for implementing one or more of the following functions: establishing a communication group, adding a group member to or deleting a group member from a communication group, coordinating resources within a communication group, allocating sidelink transmission resources to another terminal device, receiving sidelink feedback information from another terminal device, and coordinating resources with another communication group.

## Mode of sidelink communication

Two modes of sidelink communication are defined in some standards or protocols (for example, the 3rd Generation Partnership Project (3rd Generation Partnership Project, 3GPP)): a first mode and a second mode.

In the first mode, a resource (the resource mentioned in this application may also be referred to as a transmission resource, or a time-frequency resource) for a terminal device is allocated by a network device. The terminal device may transmit data on a sidelink by using the resource allocated by the network device. The network device may allocate a resource for single transmission to the terminal device, or may allocate a resource for semi-persistent transmission to the terminal device. The first mode may be applied to a scenario in which a terminal device is located in coverage of the network device, for example, the scenario shown in FIG. 2 above. In the scenario shown in FIG. 2, the terminal device 120a is located within the coverage of the network device 110. Therefore, the network device 110 may allocate, to the terminal device 120a, a resource used in a sidelink transmission process.

In the second mode, the terminal device may independently select one or more resources from a resource pool (resource pool, RP). Then, the terminal device may perform sidelink transmission by using the selected resource. For example, in the scenario shown in FIG. 4, the terminal device 120b is located outside the cell coverage. Therefore, the terminal device 120b may independently select a resource from a pre-configured resource pool to perform sidelink transmission. Alternatively, in the scenario shown in FIG. 2, the terminal device 120a may independently select one or more resources from a resource pool configured by the network device 110, to perform sidelink transmission.

In some implementations, the terminal device may implement a resource allocation scheme in the second mode by performing the following step 1 and step 2.

In step 1, the terminal device uses all available resources in a resource selection window as a resource set A. Specifically, two cases may be included: Case 1-1 and Case 1-2.

In Case 1-1, if the terminal device does not perform listening in specific slots in a listening window, all resources in slots, corresponding to the slots on which the listening is not performed, in a selection window are excluded. In some implementations, the terminal device may determine, based on a set of values of a resource reservation period (resource reservation period) field in a used resource pool configuration, the slots, corresponding to the slots on which the listening is not performed in the listening window, in the selection window.

In Case 1-2, if the terminal device detects a physical sidelink control channel (physical sidelink control channel, PSCCH) within the listening window, the terminal device measures a reference signal received power (reference signal received power, RSRP) of the PSCCH or an RSRP of a PSSCH scheduled by the PSCCH. If the measured RSRP is greater than a sidelink reference signal received power (sidelink reference signal received power, SL-RSRP) threshold, and it is determined, based on resource reservation information in sidelink control information transmitted in the PSCCH, that a reserved resource is in the resource selection window, a corresponding resource is excluded from the set A. If a quantity of remaining resources in the resource set A is less than X% of all resources in the resource set A before resource exclusion, the SL-RSRP threshold is increased by 3 dB and step 1 is performed again. In some implementations, possible values of X may be {20, 35, 50}, and the terminal device may determine a parameter X from the value set based on a priority of to-be-transmitted data. In addition, the SL-RSRP threshold is related to a priority carried in the PSCCH detected by the terminal and the priority of the to-be-transmitted of the terminal device. The terminal device uses the remaining resources in the set A after resource exclusion as a candidate resource set.

In step 2, the terminal device randomly selects several resources from the candidate resource set as transmit resources for its initial transmission and retransmission.

## Listening-based resource selection method

Referring to FIG. 6, a terminal device may trigger resource selection or resource reselection in a slot n. In some implementations, the slot n may be a slot in which a higher layer triggers a physical layer to report a candidate resource set. A resource selection window starts from $n+T_1$ and ends at $n+T_2$, and is represented as $[n+T_1, n+T_2]$, where $0 \leq T_1 \leq T_{proc,1}$; when a subcarrier spacing is 15 kHz, 30 kHz, 60 kHz, or 120 kHz, $T_{proc,1}$ is 3 slots, 5 slots, 9 slots, or 17 slots. $T_{2min} \leq T_2 \leq$ Remaining delay budget of a service; a value set of $T_{2min}$ is $\{1, 5, 10, 20\} * 2^\mu$ slots; and $\mu = 0, 1, 2, 3$ corresponds to cases in which the subcarrier spacing is 15 kHz, 30 kHz, 60 kHz, or 120 kHz, respectively. The terminal device determines $T_{2min}$ from the value set based on a priority of data to be transmitted by the terminal device. For example, when the subcarrier spacing is 15 kHz, the terminal device determines $T_{2min}$ from the set $\{1, 5, 10, 20\}$ based on the priority of data to be transmitted by the terminal device. When $T_{2min}$ is greater than or equal to the remaining delay budget of the service, $T_2$ is equal to the remaining delay budget of the service. The remaining delay budget is a difference between a current instant and an instant corresponding to a delay requirement of the data. For example, a delay requirement for a data packet arriving at a slot n is 50 milliseconds. Assuming that one slot is 1 millisecond, if a current instant is a slot n, the remaining delay budget is 50 milliseconds; and if the current instant is a slot n+20, the remaining delay budget is 30 milliseconds.

Before resource selection, the terminal device is required to perform resource listening in a listening window ranging from $n-T_0$ to $n-T_{proc,0}$, where a value of $T_0$ is 100 milliseconds or 1100 milliseconds. When the subcarrier spacing is 15 kHz, 30 kHz, 60 kHz, or 120 kHz, $T_{proc,0}$ is one slot, one slot, two slots, or four slots, respectively. Generally, a terminal device listens, in each slot (except a slot in which the terminal device performs transmission), to sidelink control information (sidelink control information, SCI) transmitted by another terminal device. If resource selection or resource reselection is triggered in the slot n, the terminal device may use a result of resource listening performed in $n-T_0$ to $n-T_{proc,0}$. The following describes a resource selection process with reference to step a and step b.

In step a, the terminal device (such as a physical layer of the terminal device) excludes a resource that is not suitable for sidelink transmission from a resource selection window based on a channel listening result.

The terminal device uses, as a resource set A, all candidate available resources, that belong to a resource pool used by the terminal device, in the resource selection window. Any resource in the set A may be denoted as R(x,y), where x and y indicate a frequency domain location and a time domain location of the resource, respectively. In addition, an initial quantity of resources in the set A is denoted as $M_{tatal}$.

Listening of the terminal device may include two cases: a-1 and a-2.

In Case a-1, if the terminal device transmits data in a slot a in a listening window without performing listening, the terminal device may determine whether a slot a+q*Prxlg overlaps with a resource R(x,y+j*Ptxlg). If they overlap, the resource R (x, y) is excluded from the resource set A, where j = 0, 1, 2, 3, ..., C-1, and C is determined by a random counter (counter) value generated by the terminal device. Ptxlg represents a quantity of logical slots converted from a resource reservation period Ptx of the terminal. Prxlg represents a quantity of logical slots converted from Prx, where Prx herein represents any allowed resource reservation period in the resource pool. If Prx < Tscal and $n - m \leq$ Prxlg,

$$Q = \lceil Tscal/Prx \rceil$$ ; otherwise Q = 1. Tscal is equal to a value of T2 in the unit of millisecond.

In Case a-2, if the terminal device detects, on E(v, m) in a slot m in the listening window, first SCI transmitted in a PSCCH, the terminal device measures SL-reference signal received power (reference signal receiving power, RSRP) of the PSCCH or SL-RSRP of a PSSCH scheduled by the PSCCH (namely, SL-RSRP of a PSSCH associated with the PSCCH and transmitted at the same slot as the PSCCH).

If the measured SL-RSRP is greater than the SL-RSRP threshold and resource reservation between transport blocks (transport block, TB) is activated in the resource pool used by the terminal device, the terminal device assumes that the terminal device has received first sidelink control information with the same content in a slot m+q*Prxlg, where q = 1, 2, 3, ..., Q, and if Prx < Tscal and $n - m \leq$ Prxlg, $Q = \lceil Tscal/Prx \rceil$ ; otherwise Q = 1. Tscal is equal to a value of T2 in the unit of millisecond. Prxlg represents a quantity of logical slots converted from Prx, where Prx herein represents a resource reservation period indicated by "resource reservation period" in first sidelink control information transmitted in a PSCCH detected by the terminal device. The terminal device determines whether resources indicated in "time resource assignment (time resource assignment)" and "frequency resource assignment (frequency resource assignment)" fields of the first sidelink control information received in the slot m and Q first sidelink control information assumed to be received, overlap with the resource R(x,y+j*Ptxlg). If they overlap, the terminal device excludes the corresponding resource R(x, y) from the set A, where j = 0, 1, 2, 3, ..., C-1, and C is determined by a random counter value generated by the terminal. Ptxlg represents a quantity of logical slots converted from Prx, where Ptx represents a resource reservation period determined by the terminal device that performs resource selection.

The RSRP threshold is determined based on a priority P1 carried in a PSCCH detected by the terminal device and a priority P2 of data to be transmitted by the terminal device. The configuration of the resource pool used by the terminal device may include an SL-RSRP threshold table, where the SL-RSRP threshold table includes SL-RSRP thresholds corresponding to all priority combinations. The configuration of the resource pool may be configured by a network, or pre-configured. If a quantity of remaining resources in the resource set A after the resource exclusion is less than $M_{total}$*X%, the terminal device may increase the SL-RSRP threshold by 3 dB and perform step a again, where a value of X may be {20,35,50}. The configuration of the resource pool used by the terminal device includes a correspondence between a priority and a possible value of X. The terminal device may determine a value of X based on the correspondence and a priority of data to be transmitted.

The physical layer of the terminal device may report the resource set A subjected to resource exclusion as the candidate resource set to the higher layer, that is, a medium access control (media access control, MAC) layer of the terminal.

In step b, the higher layer (such as the MAC layer) randomly selects a resource from the reported candidate resource set to transmit data. In other words, the terminal device randomly selects a resource from the candidate resource set to transmit data.

It should be noted that the foregoing RSRP threshold is determined based on a priority P1 carried in the PSCCH detected by the terminal device and a priority P2 of data to be transmitted by the terminal device.

In addition, whether the terminal device compares the measured PSCCH-RSRP or the PSSCH-RSRP scheduled by the PSCCH with the SL-RSRP threshold, depends on the resource pool configuration of the resource pool used by the terminal device. The configuration of the resource pool may be configured by a network, or pre-configured.

It should be further noted that possible values of X are {20%, 35%, 50%}. The configuration of the resource pool used by the terminal device includes a correspondence between a priority and a possible value described above. The terminal device determines a value of X based on the correspondence and a priority of data to be transmitted. The resource pool configuration may be configured by a network or pre-configured.

**Data transmission modes of sidelink communication**

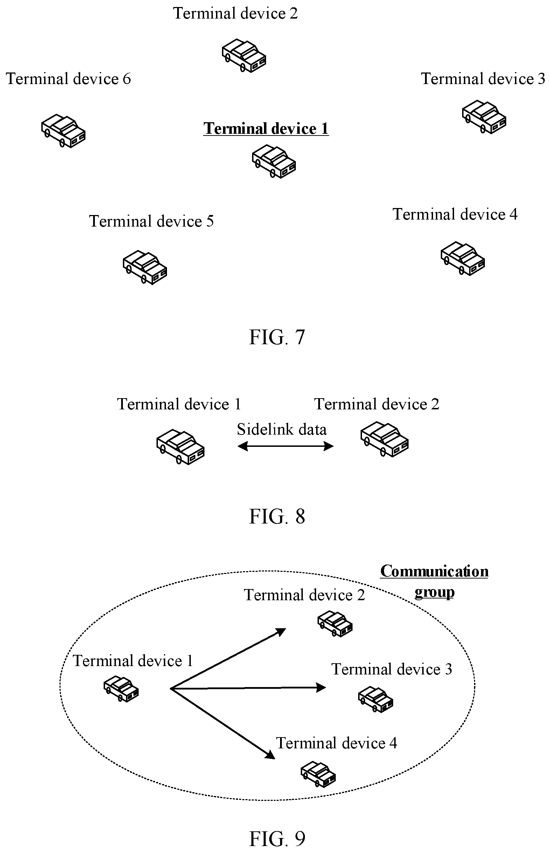

Some sidelink communication systems (such as long term evolution vehicle to everything (long term evolution vehicle to everything, LTE-V2X)) support a broadcast-based data transmission mode (briefly referred to as broadcast transmission below). For the broadcast transmission, a receiving-end terminal may be any terminal device around a transmitting-end terminal. For example, in FIG. 7, a terminal device 1 is a transmitting-end terminal, and a receiving-end terminal corresponding to the transmitting-end terminal is any terminal device around the terminal device 1, for example, may be a terminal device 2 to a terminal device 6 in FIG. 7.

In addition to the broadcast transmission, some communications systems also support a unicast-based data transmission mode (referred to as unicast transmission for short) and/or a multicast-based data transmission mode (referred to as multicast transmission for short). For example, new radio vehicle to everything (new radio vehicle to everything, NR-V2X) expects to support autonomous driving. Autonomous driving poses higher requirements for data interaction between vehicles. For example, data interaction between vehicles requires a higher throughput, a lower delay, higher reliability, larger coverage, a more flexible resource allocation manner, and the like. Therefore, to improve performance of data interaction between vehicles, NR-V2X is introduced with unicast transmission and multicast transmission.

For the unicast transmission, the receiving-end terminal generally includes only one terminal device. For example, in FIG. 8, unicast transmission is performed between a terminal device 1 and a terminal device 2. The terminal device 1 may be a transmitting-end terminal, and the terminal device 2 may be a receiving-end terminal. Alternatively, the terminal device 1 may be a receiving-end terminal, and the terminal device 2 may be a transmitting-end terminal.

For the multicast transmission, the receiving-end terminal may be terminal devices in a communication group, or the receiving-end terminal may be terminal devices within a specific transmission distance. For example, in FIG. 9, a terminal device 1, a terminal device 2, a terminal device 3, and a terminal device 4 constitute a communication group. If the terminal device 1 transmits data, all the other terminal devices (the terminal device 2 to the terminal device 4) in the group may be receiving-end terminals.

**Structure of a system frame**

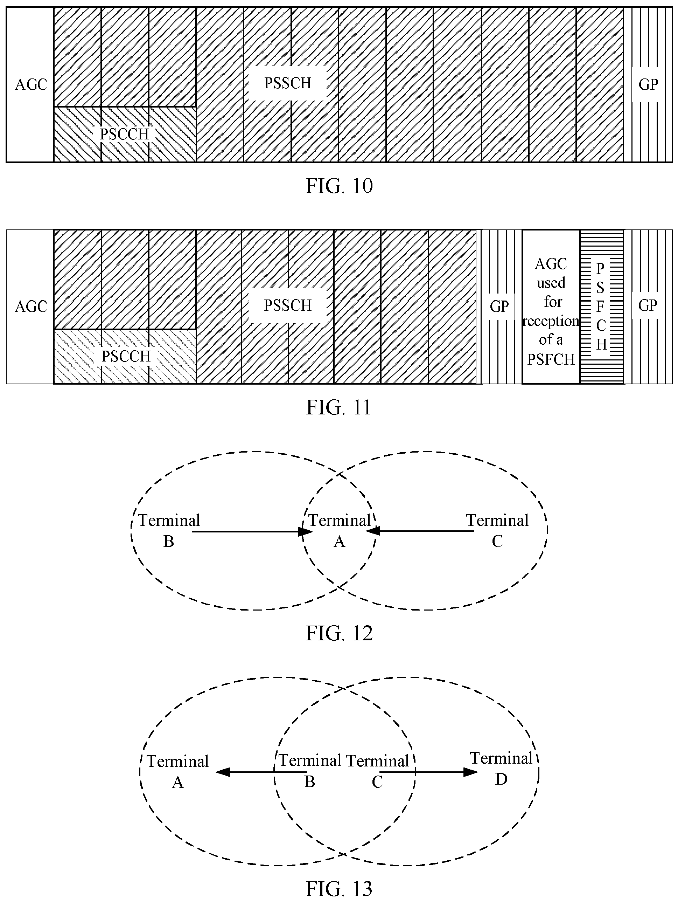

With reference to FIG. 10 and FIG. 11, the following describes a frame structure of a sidelink system frame to which embodiments of this application are applicable. FIG. 10 shows a frame structure of a system frame that does not carry a physical sidelink feedback channel (physical sidelink feedback channel, PSFCH) in NR-V2X. FIG. 11 shows a frame structure of a system frame that carries a PSFCH in NR-V2X.

Referring to FIG. 10, in time domain, a PSCCH occupies two or three sidelink symbols starting from the second sidelink symbol (for example, an orthogonal frequency division multiplexing (orthogonal frequency division multiplexing, OFDM) symbol) of a system frame. In frequency domain, the PSCCH may occupy {10, 12 15, 20, 25} physical resource blocks (physical resource block, PRB). Generally, to reduce complexity of blind detection performed by a terminal device on the PSCCH, only one PSCCH symbol quantity and only one PRB quantity are allowed to be configured in one resource pool. In addition, because a sub-channel is a minimum granularity for PSSCH resource allocation specified in NR-V2X, a quantity of PRBs occupied by the PSCCH is required to be less than or equal to a quantity of PRBs included in one sub-channel in the resource pool, to avoid additional limitation on resource selection or allocation of the PSSCH.

Still referring to FIG. 10, in time domain, a PSSCH also starts from the second sidelink symbol of a system frame, and ends at the last but one sidelink symbol of the system frame. In frequency domain, the PSSCH occupies K1 sub-channels of the system frame, where each sub-channel includes K2 consecutive PRBs, and K1 and K2·are positive integers.

Generally, the last symbol of the system frame is a guard period (guard period, GP) symbol. In addition, the first sidelink symbol of the system frame is a repetition of the second sidelink symbol. Generally, when receiving the system frame, a terminal may use the first sidelink symbol as an automatic gain control (automatic gain control, AGC) symbol. Generally, data on the AGC symbol is not used for data demodulation.

Referring to FIG. 11, when a system frame carries a PSFCH channel, the last but one sidelink symbol and the last but two sidelink symbol in the system frame are used for PSFCH transmission. In addition, a sidelink symbol that is before a PSFCH sidelink symbol and carried in the system frame serves as a GP.

**PSFCH in NR V2X**

In some communications systems (such as R16 NR-V2X), a sequence-type PSFCH is supported. This type of PSFCH may also be referred to as a PSFCH format 0. This type of PSFCH occupies one PRB in frequency domain and one OFDM symbol in time domain, and a sequence type used by the PSFCH is the same as that of a PUCCH format 0. In a resource pool, a PSFCH resource is configured at a period of one slot, two slots, or four slots. In a slot in which there is a PSFCH resource, the PSFCH resource is located on a last OFDM symbol that may be used for sidelink transmission in the slot. However, to support transmission/reception switch-over and AGC adjustment, as shown in FIG. 11, two OFDM symbols before the PSFCH symbol are used for transmission/reception switch-over and AGC adjustment, respectively. In addition, neither PSCCH nor PSSCH is allowed to be transmitted on the foregoing three OFDM symbols. In R16 NR-V2X, the PSFCH is only used to carry hybrid automatic repeat request (hybrid automatic repeat request, HARQ) feedback information. The PSFCH has a capacity of one bit.

A transmission resource for a PSFCH may be determined based on a time-frequency location of a transmission resource for a PSSCH corresponding to the PSFCH. In some communications systems (such as NR-V2X), the following two manners of determining resources for a PSFCH are supported, and a specific manner of determining resources for a PSFCH may be determined based on higher layer signalling configuration.

In Manner 1, a transmission resource for a PSFCH is determined based on a first sub-channel of a frequency domain resource for a PSSCH.

In Manner 2, a transmission resource for a PSFCH is determined based on all sub-channels occupied by a PSSCH in frequency domain.

For Manner 1, since the transmission resource for the PSFCH is determined based on only the first sub-channel occupied by the PSSCH, regardless of how many sub-channels occupied by the PSSCH, a quantity of feedback resources for the PSFCH corresponding to the PSSCH is fixed. For Manner 2, since a quantity of transmission resources for the PSFCH is determined based on a quantity of sub-channels occupied by the PSSCH, more sub-channels occupied by the PSSCH indicate more transmission resources for the PSFCH. Therefore, Manner 2 is more suitable for scenarios where more sidelink HARQ feedback resources are required, for example, a second type of sidelink HARQ feedback manner in multicast.

A transmission resource set $R_{\text{PRB,CS}}^{\text{PSFCH}}$ for the PSFCH corresponding to the PSSCH may be determined based on a slot and a sub-channel for transmitting the PSSCH. In the resource set, indexes of transmission resources for the PSFCH may be first determined according to an ascending order of RBs, and then according to an ascending order of cyclic shift (cyclic shift, CS) pairs. Further, in the resource set, the transmission resource for the PSFCH may be determined according to the following formula:

$$\left(P_{ID}+M_{ID}\right)\bmod R_{\mathrm{PRB,CS}}^{\mathrm{PSFCH}}$$

In the formula, $P_{m}$ indicates information about a transmitting-end identity (identuty, ID), that is, a source ID of a transmitting-end UE carried in SCI. For a unicast or non-acknowledgement (non-acknowledgement, NACK)-only multicast sidelink HARQ feedback manner, $M_{ID}$ = 0. For an acknowledgement (acknowledgemen, ACK)/NACK multicast sidelink HARQ feedback manner, $M_{ID}$ indicates an identity within a group of a receiving-end UE that is configured by a higher layer.

In NR-V2X, a PSFCH resource may be configured by using SL-PSFCH-Config-r16 signalling. sl-PSFCH-Period-r16 is used to configure a period of PSFCH resources, sl-PSFCH-RB-Set-r16 is used to configure a PRB that may be used for PSFCH transmission on an OFDM symbol where a PSFCH resource is located, sl-NumMuxCS-Pair-r16 is used to configure a quantity of cyclic shifts of a PFSCH sequence allowed within a PRB, sl-MinTimeGapPSFCH-r16 is used to configure a minimum time interval between a PSFCH and a PSSCH associated with the PSFCH, sl-PSFCH-HopID-r16 is used to configure a frequency hop ID of a PSFCH, the ID is used to determine a sequence of the PSFCH, and sl-PSFCH-CandidateResourceType-r16 is used to configure a manner of determining candidate PSFCH resources.

A format of SL-PSFCH-Config-r16 signalling may be as follows:

```
SL-PSFCH-Config-r16 ::=              SEQUENCE {
    sl-PSFCH-Period-r16                  ENUMERATED {sl0, sl1, sl2, sl4}
OPTIONAL,     -- Need M
    sl-PSFCH-RB-Set-r16                  BIT STRING (SIZE (10..275))
OPTIONAL,     -- Need M
    sl-NumMuxCS-Pair-r16                 ENUMERATED {n1, n2, n3, n6}
OPTIONAL,     -- Need M
    sl-MinTimeGapPSFCH-r16               ENUMERATED {sl2, sl3}
PTIONAL,     -- Need M
    sl-PSFCH-HopID-r16                   INTEGER (0..1023)
OPTIONAL,     -- Need M
    sl-PSFCH-CandidateResourceType-r16   ENUMERATED {startSubCH, allocSubCH}
OPTIONAL,     -- Need M
    ...
}
```

## Resource allocation enhancement

In the above transmission mode in the second mode, a terminal device may randomly select a transmission resource from a resource pool, or the terminal device may select a transmission resource based on a listening result. This resource selection manner may avoid interference between terminal devices to some extent. However, there are still problems such as a hidden node (hidden node) problem, a half-duplex (half-duplex) problem, an exposed terminal problem, and a power consumption problem. Each of the above problems is described below.

FIG. 12 is a schematic diagram of hidden nodes. Referring to FIG. 12, a terminal B may select a resource based on a listening result, and transmit sidelink data to a terminal A by using the resource. Since the terminal B and a terminal C are far apart and cannot detect transmission of each other, the terminal B and the terminal C may select a same transmission resource. In this case, data transmitted by the terminal C may interfere with the data transmitted by the terminal B. This is a hidden node problem.

For a half-duplex problem, when a terminal device selects a transmission resource through listening, and if the terminal device transmits sidelink data in a slot in a listening window, the terminal device cannot receive data from another terminal in the slot due to restrictions of half-duplex, and has no listening result. Therefore, the terminal device may exclude all resources corresponding to the slot in a selection window, to avoid interference with the another terminal. It may be learned from the foregoing description that, due to restrictions of half-duplex, the terminal device excludes many resources that are unnecessary to be excluded.

FIG. 13 is a schematic diagram of exposed terminals. Referring to FIG. 13, a transmitting terminal B and a transmitting terminal C may detect each other, but a target receiving terminal A of the transmitting terminal B is far away from the transmitting terminal C, and a target receiving terminal D of the transmitting terminal C is far away from the transmitting terminal B. In this case, even if the transmitting terminal B and the transmitting terminal C use a same time-frequency resource, reception of their respective target receiving terminals is not affected. However, since the transmitting terminal B is close to the transmitting terminal C, signal received power detected from each other during listening may be high. As a result, the transmitting terminal B and the transmitting terminal C may select orthogonal time-frequency resources, which may ultimately lead to a reduction in resource utilization.

For a power consumption problem, during the listening, the terminal device is required to continuously listen to resources to determine which resources are available. However, the terminal device is required to consume a lot of energy to continuously listen to resources. This is not a problem for a vehicle-mounted terminal, because the vehicle-mounted terminal has a power supply device. However, for a handheld terminal, excessive energy consumption causes the terminal to run out of power quickly. Therefore, how to reduce energy consumption of terminal devices is also a problem that needs to be considered in a resource selection process.

Due to the foregoing problems in the resource selection process in the second mode, a resource selection scheme based on coordination between UEs is introduced. That is, on the basis of the resource listening scheme used in the second mode, a terminal (such as UE-A) may transmit inter-UE coordination (inter-UE coordination) information to another terminal (UE-B) to assist UE-B in resource selection. Inter-UE coordination may be implemented in the following two manners.

Manner 1: When UE-A receives explicit request information (explicit request) from UE-B or meets a specific condition, UE-A may determine coordination information based on a resource listening result. The coordination information may include a resource set. The resource set may be a resource set that is suitable for use by UE-B or a resource set that is not suitable for use by UE-B. During resource selection, UE-B may select preferentially a resource from the resource set that is suitable for use by UE-B or exclude a resource from the resource set that is not suitable for use by UE-B.

Manner 2: If UE-A detects that there may be a conflict between a resource reserved for UE-B and a resource reserved for another terminal, or UE-A cannot perform, due to restrictions of half-duplex, reception on the resource reserved for UE-B, UE-A may transmit resource conflict information (conflict information) to UE-B on a PSFCH resource corresponding to the conflicting resource or on a PSFCH resource corresponding to a PSCCH that indicates the conflicting resource. After receiving the resource conflict information, UE-B may perform reselection on the conflicting resource.

Through the above two manners, a probability of collision of resources selected by UE-B can be effectively reduced, an impact of the hidden terminal and half-duplex can be reduced, and thus performance of transmission resource selection in the second mode can be improved.

### Sidelink-based positioning

In 3GPP R-17, 3GPP RAN studies "NR positioning enhancements" and "scenarios and requirements of in-coverage, partial coverage, and out-of-coverage NR positioning use cases". The study on "scenarios and requirements of in-coverage, partial coverage, and out-of-coverage NR positioning use cases" focuses on V2X and public safety use cases, and a study result is recorded in TR38.845. In addition, SA1 formulates a "ranging-based services" requirement in TS22.261, and formulates a positioning accuracy requirement in TS22.104 for commercial use cases and use of an industrial internet of things (industrial internet of things, IIoT) in an out-of-coverage scenario. 3GPP needs to research and develop sidelink positioning solutions to support use cases, scenarios, and requirements identified in these activities. To improve positioning accuracy, especially to achieve positioning of terminals located outside coverage of cellular networks, 3GPP introduces positioning based on a sidelink positioning reference signal (side link positioning reference signal, SL PRS) in Rel-18.

A manner of selecting a transmit resource for the sidelink positioning reference signal may also be similar to the manner of selecting a data transmission resource described above, that is, the terminal device may independently select a transmit resource to transmit the SL PRS. Similar to the solution described above, there may be a conflict between an SL PRS resource selected by a first terminal device and a resource selected by another terminal device; and if there is a conflict with the SL PRS resource, SL PRS transmission performance may be affected. Therefore, how to improve SL PRS transmission performance is an urgent problem to be currently resolved.

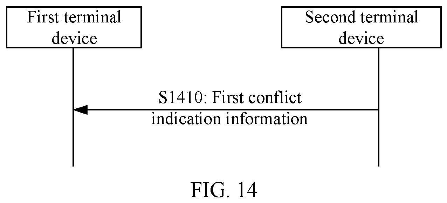

In view of this, to improve SL PRS transmission performance, a second terminal device in embodiments of this application may transmit a conflict indication for an SL PRS resource to another terminal device (such as a target terminal device). With reference to FIG. 14, a wireless communication method according to an embodiment of this application is described below.

Referring to FIG. 14, the method shown in FIG. 14 includes step S1410.

In step S1410, a second terminal device may transmit first conflict indication information to a target terminal device.

The target terminal device may be the first terminal device or a third terminal device. The first terminal device is a terminal device that indicates a first SL PRS resource. The third terminal device may be a terminal device whose sidelink transmission resource conflicts with the first SL PRS resource.

The first SL PRS resource may be a resource in a resource pool. The first terminal device may select the first SL PRS resource from the resource pool. The resource pool may be a shared resource pool or a dedicated resource pool. The shared resource pool may be understood as a resource pool that contains a sidelink data channel, that is, a PSSCH, transmitted by a backward terminal device (that is, a device in 3GPP Release 16 and Release 17). The dedicated resource pool may be understood as a resource pool that does not contain a sidelink data channel transmitted by a backward terminal device.

A manner in which the first terminal device selects the first SL PRS resource may be similar to a manner in which the first terminal device selects a PSSCH resource, that is, the first terminal device may select the first SL PRS resource based on the second mode described above.

The first SL PRS resource may be a resource reserved for the first terminal device. The first terminal device may indicate, to another terminal device, an SL PRS resource reserved for the first terminal device. In some embodiments, the first terminal device may indicate the first SL PRS resource by using first SCI. For example, the first terminal device may transmit the first SCI to another terminal device. The first SCI may be used to indicate the first SL PRS resource. The first terminal device may transmit the first SCI in a unicast manner or a multicast manner, which is not specifically limited in embodiments of this application.

The first SCI may be carried in a PSCCH. The first SCI may include first-stage SCI and/or second-stage SCI.

The first SL PRS resource may be a transmit resource for an SL PRS, or may be a reserved resource for an SL PRS. A transmit resource for an SL PRS may be understood as a resource located in a same slot as SCI that is used to indicate the first SL PRS resource. A reserved resource for an SL PRS may be understood as a resource located in a slot different from a slot where SCI that is used to indicate the first SL PRS resource is located. For example, the terminal device indicates a plurality of SL PRS resources by using the first SCI. The plurality of SL PRS resources include a first SL PRS resource and a second SL PRS resource. The first SL PRS resource is located in a same slot as the first SCI, and the second SL PRS resource is located in a slot after the slot in which the first SCI is located. Therefore, the first SL PRS resource is a transmit resource for an SL PRS, and the second SL PRS resource is a reserved resource for an SL PRS. In some embodiments, the first SCI may indicate both a transmit resource for an SL PRS and a reserved resource for an SL PRS.

In some embodiments, the first terminal device may transmit an SL PRS in a slot in which the first SCI is transmitted, that is, the SCI used to indicate the first SL PRS resource may be transmitted in the same slot as the SL PRS.

Similar to a manner in which resources are reserved for the first terminal device, a sidelink transmission resource may also be reserved for the third terminal device. The sidelink transmission resource may be used to transmit one or more of a PSCCH, a PSSCH, or an SL PRS. The third terminal device may indicate the sidelink transmission resource by using second SCI. For example, the third terminal device may transmit the second SCI to another terminal device. The second SCI may be used to indicate the sidelink transmission resource. The third terminal device may transmit the second SCI in a unicast manner or a multicast manner, which is not specifically limited in embodiments of this application. The second SCI may be carried in a PSCCH.

In embodiments of this application, the first conflict indication information may be transmitted in a case in which there is a conflict with the first SL PRS resource. The second terminal device may determine whether there is a conflict with the first SL PRS resource indicated by the first terminal device. In a case in which there is a conflict with the first SL PRS resource, the second terminal device may transmit first conflict indication information to the first terminal device or the third terminal device. The conflict indication information is transmitted, so that the target terminal device reselects a resource, thereby reducing a probability of collision of SL PRS resources and thus improving SL PRS transmission performance. In addition, the first conflict indication information may be transmitted in a case in which there is a conflict with an SL PRS already transmitted by the first terminal device. The first conflict indication information is transmitted, so that the first terminal device retransmits an SL PRS, thereby being conducive to improving SL PRS transmission performance. Since SL PRS transmission performance is improved, positioning accuracy based on an SL PRS can also be improved.

In some embodiments, if the first SL PRS resource is a reserved resource for an SL PRS, the first conflict indication information may be used to indicate a resource conflict in the reserved resource. After receiving the first conflict indication information transmitted by the second terminal device, the first terminal device may perform reselection on a resource (that is, an SL PRS resource) corresponding to the first conflict indication information, thereby preventing the first terminal device from transmitting an SL PRS on the first SL PRS resource, and thus improving SL PRS transmission performance.

In some embodiments, if the first SL PRS resource is a transmit resource for an SL PRS, the first conflict indication information may be used to indicate a resource conflict in the transmit resource. After the first terminal device receives the first conflict indication information transmitted by the second terminal device, the first terminal device determines that the SL PRS is not transmitted successfully on the first SL PRS resource. Then, the first terminal device may retransmit an SL PRS, thereby improving SL PRS transmission performance.

In some embodiments, the second terminal device may transmit the first conflict indication information to the third terminal device. After receiving the first conflict indication information, the third terminal device may reselect a sidelink transmission resource, thereby preventing transmitting a sidelink signal on a resource that conflicts with the first SL PRS resource, and thus improving SL PRS transmission performance of the first SL PRS resource.

## Conflict determination for a first SL PRS resource

A manner of determining whether there is a conflict with a first SL PRS is not specifically limited in embodiments of this application. In some embodiments, a manner of determining a conflict with a first SL PRS resource may be consistent with a manner of determining a conflict with a PSSCH resource.

In some embodiments, whether there is a conflict with the first SL PRS resource may be determined based on a first condition. If the first condition is met, there is a conflict with the first SL PRS resource. The first condition is not specifically limited in embodiments of this application. For example, the first condition may be determined based on one or more of the following information: whether the first SL PRS resource overlaps with the sidelink transmission resource for the third terminal device; a signal measurement result based on first SCI; a signal measurement result based on second SCI; or whether the second terminal device expects to perform a reception operation on the first SL PRS resource.

In some embodiments, the first condition may include one or more of the following: the first SL PRS resource overlaps with the sidelink transmission resource for the third terminal device, and the signal measurement result based on the second SCI is greater than or equal to a first preset threshold; the first SL PRS resource overlaps with the sidelink transmission resource for the third terminal device, and a difference between the signal measurement result based on the second SCI and the signal measurement result based on the first SCI is greater than or equal to a second preset threshold; or the second terminal device does not expect to perform a reception operation on the first SL PRS resource.

In some embodiments, the first condition may include the first SL PRS resource overlapping with the sidelink transmission resource for the third terminal device. If the first SL PRS resource overlaps with the sidelink transmission resource for the third terminal device, the second terminal device may determine that there is conflict with the first SL PRS resource.

In some embodiments, the first condition may include the first SL PRS resource overlapping with the sidelink transmission resource for the third terminal device, and the signal measurement result based on the second SCI being greater than or equal to a first preset threshold. In a case in which the first SL PRS resource overlaps with the sidelink transmission resource, the second terminal device may further determine whether the signal measurement result based on the second SCI is greater than or equal to the first preset threshold. In a case in which the signal measurement result based on the second SCI is greater than or equal to the first preset threshold, the second terminal device may determine that there is a conflict with the first SL PRS resource.

The signal measurement result based on the second SCI may refer to a signal measurement result of one or more of a PSCCH, a PSSCH, or an SL PRS indicated by the second SCI. For ease of description, one or more of a PSCCH, a PSSCH, or an SL PRS indicated by the second SCI are referred to below as sidelink signals. The sidelink signal may be a signal located in a same slot as the second SCI. For example, if the first SL PRS resource is a reserved resource for an SL PRS, that is, the sidelink transmission resource for the third terminal device is also a reserved resource, the signal measurement result based on the second SCI may refer to a signal measurement result of a sidelink signal located in a same slot as the second SCI. The second terminal device may measure the sidelink signal, to obtain a signal measurement result.

In some embodiments, the first preset threshold may be determined based on a priority indicated by the first SCI and a priority indicated by the second SCI. If the priority indicated by the first SCI is denoted as p1 and the priority indicated by the second SCI is denoted as p2, the first preset threshold may be determined based on p1 and p2, and a correspondence between p1, p2 and the threshold. The correspondence between p1, p2 and the threshold may be configured by a network device or pre-configured. In some embodiments, a smaller value of a priority p indicates a higher priority.

In some embodiments, the first condition may include the first SL PRS resource overlapping with the sidelink transmission resource for the third terminal device, and a difference between the signal measurement result based on the second SCI and the signal measurement result based on the first SCI being greater than or equal to a second preset threshold. In a case in which the first SL PRS resource overlaps with the sidelink transmission resource, the second terminal device may further determine whether the difference between the signal measurement result based on the second SCI and the signal measurement result based on the first SCI being greater than or equal to the second preset threshold. In a case in which the difference is greater than or equal to the second preset threshold, the second terminal device may determine that there is a conflict with the first SL PRS resource. The second preset threshold may be configured by a network device or pre-configured.

A manner of obtaining the signal measurement result based on the second SCI is consistent with that described above. For the sake of brevity, details are not described herein again.

A manner of obtaining the signal measurement result based on the first SCI is similar to the manner of obtaining the signal measurement result based on the second SCI. The signal measurement result based on the first SCI may refer to a signal measurement result of an SL PRS indicated by the first SCI. The SL PRS may be an SL PRS transmitted on a transmit resource for the SL PRS. In other words, the SL PRS may be in the same slot as the first SCI. If the first SL PRS resource is a transmit resource for an SL PRS, the signal measurement result based on the first SCI may refer to a signal measurement result of an SL PRS transmitted on the first SL PRS resource.

The signal measurement result may be one or more of an RSRP, reference signal received quality (reference signal receiving quality, RSRQ), or a signal to interference plus noise ratio (signal to interference plus noise ratio, SINR). An example in which the signal measurement result is an RSRP is used for description below. The first preset threshold may also be referred to as an absolute RSRP threshold, and the second preset threshold may also be referred to as a relative RSRP threshold. Whether to use the absolute RSRP threshold or the relative RSRP threshold may be determined based on a configuration parameter of a resource pool. For example, whether to use the absolute RSRP threshold or the relative RSRP threshold may be determined based on a configuration parameter optionForCondition2A1Scheme2 of a resource pool. If optionForCondition2A1Scheme2 is configured as 'RSRP-ThresPerPriorities', it indicates that the absolute RSRP threshold is used. If optionForCondition2A1Scheme2 is configured as 'RSRP-ThresWithRsrpMeasurement', it indicates that the relative RSRP threshold is used.

In some embodiments, the first condition may include that the second terminal device does not expect to perform a reception operation on the first SL PRS resource. If the second terminal device does not expect to perform a reception operation on the first SL PRS resource (such as a time unit where the first SL PRS resource is located) due to a half-duplex operation (for example, the second terminal device is required to perform a transmission operation on the first SL PRS resource), the second terminal device may not be able to successfully receive an SL PRS transmitted by the first terminal device on the first SL PRS resource. In this case, the second terminal device may determine that there is a conflict with the first SL PRS resource.

The first condition may be applicable to a case in which the first SL PRS resource is a transmit resource for an SL PRS, and may also be applicable to a case in which the first SL PRS resource is a reserved resource for an SL PRS.

In some embodiments, if the first SL PRS resource is a transmit resource for an SL PRS, the first condition may be determined based on a signal measurement result on the transmit resource. That is, if the first SL PRS resource is a transmit resource for an SL PRS, the first condition may be determined based on one or more of the following: whether the first SL PRS resource overlaps with the sidelink transmission resource for the third terminal device; a signal measurement result based on first SCI; a signal measurement result based on second SCI; whether the second terminal device expects to perform a reception operation on the first SL PRS resource; or a signal measurement result on the first SL PRS resource (a transmit resource for an SL PRS).

In some embodiments, the first condition may include the signal measurement result on the transmit resource being less than or equal to a third preset threshold. Since the first SL PRS resource is a transmit resource for an SL PRS, that is, the second terminal device may receive the SL PRS on the first SL PRS resource, and measure the received SL PRS to obtain the signal measurement result. If the signal measurement result is less than or equal to the third preset threshold, it indicates that received quality of the SL PRS is poor and there may be interference on the SL PRS. Therefore, the second terminal device may determine, in a case in which the signal measurement result is less than or equal to the third preset threshold, that there is a conflict with the first SL PRS resource. The third preset threshold may be configured by a network device or pre-configured.

The signal measurement result on the transmit resource may be one or more of an RSRP, RSRQ, or an SINR. The signal measurement result may be an average value of signal measurement results on a resource element that carries the SL PSR. The average value may be a linear average. The signal measurement result being an RSRP is used as an example. The RSRP may be a linear average of powers on a resource element (resource element, RE) that carries the SL PRS.

The first conditions may be used separately, or may be used in combination, which is not specifically limited in embodiments of this application.

In some embodiments, the second terminal device may first determine whether the second terminal device is a target receiving terminal of an SL PRS transmitted on the first SL PRS resource. In a case in which it is determined that the second terminal device is the target receiving terminal, the second terminal device performs determination on the first condition.

In some embodiments, the second terminal device may determine, based on SCI transmitted by the first terminal device, whether an SL PRS or a PSSCH is transmitted on a resource indicated by the SCI. If it is determined that an SL PRS is transmitted on the resource indicated by the SCI, the second terminal device may further determine whether the second terminal device is a target receiving terminal of the SL PRS.

## Determination of a target terminal device

It may be learned from the foregoing description that, the target terminal device may be the first terminal device or the third terminal device. A manner of determining the target terminal device is not specifically limited in embodiments this application.

In some embodiments, the target terminal device may be determined based on first information. The first information may be related to one or more of the following: whether the second terminal device expects to perform a reception operation on the first SL PRS resource; a type of the first SL PRS resource; a target receiving terminal of an SL PRS transmitted on the first SL PRS resource; first SCI used to indicate the first SL PRS resource; second SCI used to indicate the sidelink transmission resource for the third terminal device; or a transmission opportunity for transmitting the first conflict indication information.

Information related to the first SCI may include a priority indicated in the first SCI and/or a receiving instant of the first SCI, and information related to the second SCI may include a priority indicated in the second SCI and/or a receiving instant of the second SCI. Information related to the transmission opportunity for transmitting the first conflict indication information may include whether the transmission opportunity for transmitting the first conflict indication information is valid, and/or an instant at which the first conflict indication information is transmitted. Whether the transmission opportunity for the first conflict indication information is valid may refer to that the transmission opportunity for the first conflict indication information has not reached.

In some embodiments, the first information may include one or more of the following information: whether the target receiving terminal is allowed to transmit the first conflict indication information to the target terminal device within a resource pool; whether a priority indicated in the first SCI is lower than a priority indicated in the second SCI; whether a time interval between an instant at which the first SCI is received and an instant at which the first conflict indication information is transmitted to the first terminal device is less than or equal to a first preset interval; whether a time interval between an instant at which the second SCI is received and an instant at which the first conflict indication information is transmitted to the third terminal device is less than or equal to a second preset interval; whether a transmission opportunity for transmitting the first conflict indication information to the first terminal device is valid; or whether a transmission opportunity for transmitting the first conflict indication information to the second terminal device is valid.

In some embodiments, the first information may include whether the target receiving terminal is allowed to transmit the first conflict indication information to the target terminal device within the resource pool, or whether only the target receiving terminal is allowed to transmit the first conflict indication information to the target terminal device within the resource pool. Whether the target receiving terminal is allowed to transmit the first conflict indication information to the target terminal device within the resource pool may include: whether a target receiving terminal device of the first terminal device is allowed to transmit the first conflict indication information to the first terminal device within the resource pool, and/or whether a target receiving terminal device of the third terminal device is allowed to transmit the first conflict indication information to the third terminal device within the resource pool.

In some embodiments, the first information may include whether only the target receiving terminal is allowed to transmit the first conflict indication information to the first terminal device within the resource pool. Assuming that the second terminal device is a target receiving terminal of the third terminal device, if only the target receiving terminal is allowed to transmit the first conflict indication information to the first terminal device within the resource pool, that is, the second terminal device can transmit the conflict information to only the first terminal device and cannot transmit the conflict information to the third terminal device, the target terminal device may be the first terminal device, and the second terminal device may transmit the first conflict indication information to the first terminal device.

In some embodiments, the first information may include whether the priority indicated in the first SCI is lower than the priority indicated in the second SCI. If the priority indicated in the first SCI is lower than the priority indicated in the second SCI, the target terminal device may be the first terminal device. If the priority indicated in the first SCI is higher than the priority indicated in the second SCI, the target terminal device may be the third terminal device. If the priority indicated in the first SCI is equal to the priority indicated in the second SCI, the second terminal device may independently determine whether the target terminal device is the first terminal device or the third terminal device.

In some embodiments, the first information may include whether a time interval between an instant at which the first SCI is received and an instant at which the first conflict indication information is transmitted to the first terminal device is less than or equal to a first preset interval. The first preset interval may be determined based on duration required by a terminal device to decode the SCI. The first preset interval may be configured by a network device or pre-configured. For example, the first preset interval may be maximum duration required by a terminal to decode the SCI. If the time interval between the instant at which the first SCI is received and the instant at which the first conflict indication information is transmitted to the first terminal device is less than or equal to the first preset interval, it indicates that the second terminal device fails to transmit the first conflict indication information, that is, the second terminal device is unable to transmit the first conflict indication information to the first terminal device. If the time interval between the instant at which the first SCI is received and the instant at which the first conflict indication information is transmitted to the first terminal device is greater than the first preset interval, the target terminal device may be the first terminal device, and the second terminal device may transmit the first conflict indication information to the first terminal device.

In some embodiments, the first information may include whether a time interval between an instant at which the second SCI is received and an instant at which the first conflict indication information is transmitted to the third terminal device is less than or equal to a second preset interval. The second preset interval may be determined based on duration required by a terminal device to decode the SCI. The second preset interval may be configured by a network device or pre-configured. For example, the second preset interval may be maximum duration required by a terminal to decode the SCI. If the time interval between the instant at which the second SCI is received and the instant at which the first conflict indication information is transmitted to the third terminal device is less than or equal to the second preset interval, it indicates that the second terminal device fails to transmit the first conflict indication information, that is, the second terminal device is unable to transmit the first conflict indication information to the third terminal device. If the time interval between the instant at which the second SCI is received and the instant at which the first conflict indication information is transmitted to the third terminal device is greater than the second preset interval, the target terminal device may be the third terminal device, and the second terminal device may transmit the first conflict indication information to the third terminal device.

In some embodiments, the first information may include whether a transmission opportunity for transmitting the first conflict indication information to the first terminal device is valid. If the transmission opportunity for transmitting the first conflict indication information to the first terminal device is valid, it indicates that the transmission opportunity for the first conflict indication information has not reached, and the second terminal device may transmit the first conflict indication information to the first terminal device, that is, the target terminal device may be the first terminal device.

In some embodiments, the first information may include whether a transmission opportunity for transmitting the first conflict indication information to the third terminal device is valid. If the transmission opportunity for transmitting the first conflict indication information to the third terminal device is valid, it indicates that the transmission opportunity for the first conflict indication information has not reached, and the second terminal device may transmit the first conflict indication information to the third terminal device, that is, the target terminal device may be the third terminal device.

If the transmission opportunity for transmitting the first conflict indication information to the first terminal device is valid, and the transmission opportunity for transmitting the first conflict indication information to the third terminal device is also valid, the second terminal device may independently determine whether the target terminal device is the first terminal device or the third terminal device.

The first information may be used separately, or may be used in combination, which is not specifically limited in embodiments of this application.

In some embodiments, if the second condition is met, the target terminal device is the first terminal device. The second condition may include one or more of the following: the second terminal device does not expect to perform a reception operation on the first SL PRS resource; or the first SL PRS resource is a transmit resource for an SL PRS.

If the second terminal device does not expect to perform a reception operation on the first SL PRS resource, it indicates that the second terminal device is unable to receive, on the first SL PRS resource, the SL PRS transmitted by the first terminal device, and the second terminal device may transmit the first conflict indication information to the first terminal device, that is, the target terminal device is the first terminal device.

If the first SL PRS resource is a transmit resource for an SL PRS, it indicates that the first terminal device has transmitted the SL PRS on the first SL PRS resource which conflicts with another resource. In this case, the second terminal device may transmit the first conflict indication information to the first terminal device, to cause the first terminal device to retransmit an SL PRS, that is, the target terminal device is the first terminal device.

In some embodiments, if the first SL PRS resource is a transmit resource for an SL PRS, the second terminal device may determine, based on a standard definition, network configuration, or pre-configuration, whether to transmit the first conflict indication information to the first terminal device. In some embodiments, the second terminal device may directly transmit the first conflict indication information to the first terminal device. In some other embodiments, the second terminal device may determine, based on implementation of the second terminal device, whether to transmit the first conflict indication information to the first terminal device. In some other embodiments, the second terminal device may determine, based on a condition for transmitting the first conflict indication information described below, whether to transmit the first conflict indication information to the first terminal device.

**Condition for transmitting the first conflict indication information**

A condition for transmitting the first conflict indication information is not specifically limited in embodiments of this application. In an example, the first conflict indication information may be directly transmitted in a case in which there is a conflict with the first SL PRS resource. In another example, the first conflict indication information may alternatively be transmitted in a case in which a third condition is met.

In some embodiments, the third condition may be determined based on one or more of the following: whether the second terminal device is a target receiving terminal of an SL PRS transmitted on the first SL PRS resource; whether the second terminal device expects to perform a reception operation on the first SL PRS resource; or a transmission opportunity for transmitting the first conflict indication information.

In some embodiments, the third condition may include one or more of the following: the second terminal device is a target receiving terminal of an SL PRS transmitted on the first SL PRS resource; the second terminal device does not expect to perform a reception operation on the first SL PRS resource; a transmission opportunity for transmitting the first conflict indication information is valid; the second terminal device is not required to perform a reception operation in a time unit used for transmitting the first conflict indication information; or a transmission operation that the second terminal device is required to perform in a time unit used for transmitting the first conflict indication information does not exceed a capability of the second terminal device.

In some embodiments, the third condition may include the second terminal device being a target receiving terminal of an SL PRS transmitted on the first SL PRS resource. If the second terminal device is not a target receiving terminal of an SL PRS transmitted on the first SL PRS resource, that is, the second terminal device does not receive the SL PRS on the first SL PRS resource. In this case, the second terminal device may not need to transmit the first conflict indication information, that is, the second terminal device may not transmit the first conflict indication information to the first terminal device. If the second terminal device is the target receiving terminal of the SL PRS transmitted on the first SL PRS resource, the second terminal device may transmit the first conflict indication information to the first terminal device.

In some embodiments, the third condition may include that the second terminal device does not expect to perform a reception operation on the first SL PRS resource. If the second terminal device does not expect to perform a reception operation on the first SL PRS resource, it indicates that the second terminal device does not receive the SL PRS on the first SL PRS resource, in this case, the second terminal device may transmit the first conflict indication information to the first terminal device.

In some embodiments, the third condition may include a transmission opportunity for transmitting the first conflict indication information being valid. If the opportunity for transmitting the first conflict indication information expires, that is, the transmission opportunity for transmitting the first conflict indication information has reached, it indicates that the second terminal device is unable to transmit the first conflict indication information. In this case, the second terminal device may not transmit the first conflict indication information. Therefore, the second terminal device transmits the first conflict indication information only when the transmission opportunity for transmitting the first conflict indication information is valid. The transmission opportunity for transmitting the first conflict indication information may be a transmission opportunity for transmitting the first conflict indication information to the first terminal device, or may be a transmission opportunity for transmitting the first conflict indication information to the third terminal device.

In some embodiments, the third condition may include the second terminal device being not required to perform a reception operation in a time unit used for transmitting the first conflict indication information. If the second terminal device is required to perform a reception operation in the time unit used for transmitting the first conflict indication information, the second terminal device may not be able to transmit the first conflict indication information due to an impact of a half-duplex operation. For example, if a priority for transmitting the first conflict indication information is lower than a priority of the reception operation, the second terminal device performs the reception operation preferentially, and is therefore unable to transmit the first conflict indication information. Therefore, in embodiments of this application, the first conflict indication information may be transmitted in a case in which the second terminal device is unnecessary to perform a reception operation. The reception operation may include, for example, receiving HARQ feedback for a PSSCH transmitted.

In some embodiments, a transmission operation that the second terminal device is required to perform in a time unit used for transmitting the first conflict indication information does not exceed a capability of the second terminal device. The second terminal device may be required to perform another transmission operation in the time unit used for transmitting the first conflict indication information. If the another transmission operation exceeds the capability of the second terminal device, it indicates that the second terminal device does not have an additional capability to transmit the first conflict indication information. In this case, the second terminal device may not transmit the first conflict indication information. For example, if a priority of performing the another receiving operation by the second terminal device is higher than a priority of transmitting the first conflict indication information, the second terminal device may perform the another transmission operation preferentially, and therefore cannot transmit the first conflict indication information. The transmission operation may include, for example, transmitting HARQ feedback for a PSSCH received.

In some embodiments, the time unit may be a slot or a symbol.

The third conditions may be used separately, or may be used in combination, which is not specifically limited in embodiments of this application.

<u>Manner of determining a PSFCH resource</u>

A manner of carrying the first conflict indication information is not specifically limited in embodiments of this application. For example, the first conflict indication information may be carried in a first PSFCH resource. The first PSFCH resource may include one or more of a frequency domain resource, a time domain resource, or a code domain resource of a PSFCH. A manner of determining the first PSFCH resource is not specifically limited in embodiments of this application.

In an example, if the first conflict indication information may be transmitted in a case in which there is a conflict with an SL PRS transmitted by the first terminal device, the manner of determining the first PSFCH resource may be similar to a manner of determining a PSFCH resource corresponding to a PSSCH. For details that are not described in detail, reference may be made to the foregoing descriptions. For example, the first PSFCH resource may be determined based on a sub-channel of a first SL PRS frequency domain resource. The sub-channel of the first SL PRS frequency domain resource may be a first sub-channel of the first SL PRS frequency domain resource or all sub-channels occupied by the first SL PRS frequency domain resource.

If a first SL PRS resource is a transmit resource for an SL PRS, and the second terminal device fails to receive an SL PRS on the first SL PRS resource due to a half-duplex operation, the first PSFCH resource may be determined based on a terminal source ID indicated in SCI corresponding to a reserved resource for the SL PRS, that is, $P_{ID}$ used to determine the first PSFCH resource denotes the terminal source ID indicated in the SCI corresponding to the reserved resource for the SL PRS. In some embodiments, the reserved resource for the SL PRS may be the same as the first SL PRS resource. Assuming that the resource is a resource r1, the first terminal device may indicate the resource r1 by using SCI-1, and the resource r1 is a reserved resource for an SL PRS. The first terminal device may indicate the resource r1 by using SCI-2, and the resource r1 is a transmit resource for an SL PRS; if the second terminal device fails to receive the SL PRS on the resource r1, the second terminal device may determine the first PSFCH resource based on the terminal source ID indicated in the SCI-1.

In another example, the first PSFCH resource may be indicated by a network device or pre-configured. In some embodiments, the network device may indicate a plurality of PSFCH resources to the second terminal device, and the second terminal device may select the first PSFCH resource from the plurality of PSFCH resources. In some embodiments, the network device may indicate one or more of a time domain resource, a frequency domain resource, or a code domain resource of the first PSFCH resource, to the second terminal device. For example, the network device may indicate a frequency domain resource of the first PSFCH resource to the second terminal device. The frequency domain resource may be one or more of an RB, a PRB, or a sub-channel. The network device may indicate a frequency domain resource of the first PSFCH resource by configuring or pre-configuring.

In some embodiments, the first PSFCH resource may be a resource in a resource pool, and the resource pool may be a resource pool in which the first SL PRS resource is located. For example, if the resource pool in which the first SL PRS resource is located is a shared resource pool, the first PSFCH resource may be a resource in the shared resource pool. If the resource pool in which the first SL PRS resource is located is a dedicated resource pool, the first PSFCH resource may be a resource in the dedicated resource pool. The first PSFCH resource is configured as the resource in the resource pool, thereby reducing complexity of a mechanism of determining PSFCH resources and thus reducing overheads of PSFCH resources.

Assuming that the resource pool is a dedicated resource pool, a time unit in which the first PSFCH resource is located may belong to time units in the dedicated resource pool. The time unit may be a slot, that is, a slot in which the first PSFCH resource is located may belong to slots in the dedicated resource pool.

In some embodiments, a frequency domain resource size of the first PSFCH resource may be less than a frequency domain resource size of the resource in the resource pool (such as the dedicated resource pool), which may improve resource utilization. For example, since fewer resources are required to feed back the first conflict indication information, if all frequency domain resources in the resource pool are used to transmit the first conflict indication information, a waste of resources may be caused. Therefore, in embodiments of this application, frequency domain resources that may be used for the first PSFCH resource may be some of resource blocks RBs in the resource pool, while remaining frequency domain resources in the resource pool may be used for transmission of other signals. On the configured frequency domain resource of the first PSFCH resource, the terminal device may consider that there is no PSFCH transmitted by a backward terminal.

In some embodiments, an allocation granularity of the frequency domain resource of the first PSFCH resource may be an RB. An RB is used as an example. An RB of the first PSFCH resource may be configured by using separate signalling or may be pre-configured.

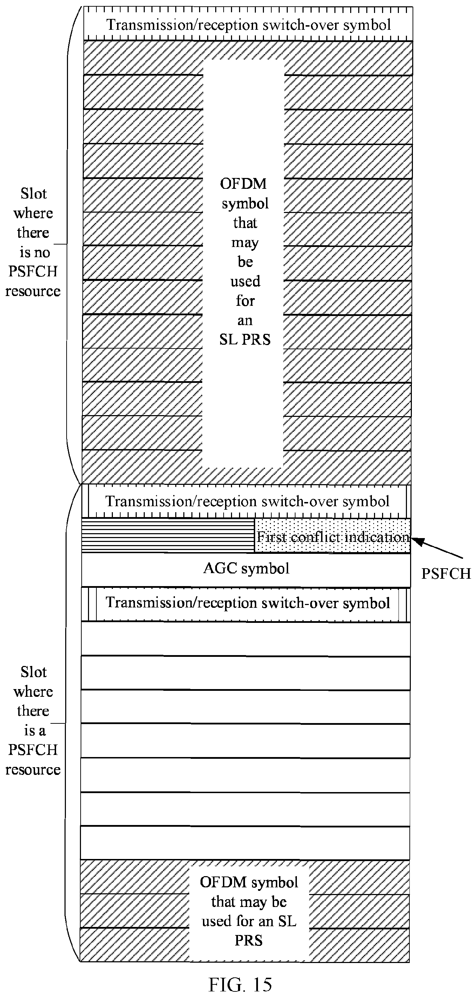

FIG. 15 is used as an example. In a slot in which there is a PSFCH resource, a 13th symbol is used for transmitting a PSFCH. A resource for the first PSFCH occupies only part of a sub-channel of the 13th symbol, while a remaining frequency domain resource of the 13th symbol may be used for transmitting another signal, for example, HARQ feedback used for sidelink communication (such as HARQ feedback for a PSSCH) or a conflict indication for a sidelink communication resource (such as a conflict indication for a PSSCH resource).

It may be learned from the foregoing description that, on the symbol where the PSFCH resource is located, not only the first conflict indication information may be transmitted, but also another terminal device may be allowed to transmit a sidelink signal. That is, on the same symbol, a HARQ feedback resource for sidelink communication, a conflict indication resource for a sidelink communication resource, and a conflict indication resource for an SL PRS resource may be configured.

In some embodiments, if a HARQ feedback resource for sidelink communication or a conflict indication resource for a sidelink communication resource is required to be transmitted on the symbol where the PSFCH is located, according to a current resource allocation manner, a symbol before a transmission/reception switch-over symbol for the PSFCH resource is generally used for transmitting a PSSCH. Therefore, in embodiments of this application, a symbol before a transmission/reception switch-over symbol for the first PSFCH resource may be used for transmitting a PSSCH. In other words, a slot in which a PSFCH is located may be included in a resource pool used for sidelink communication of a backward terminal, and in the slot in which the PSFCH is located, a symbol used for transmitting an SL PRS is not adjacent to a transmission/reception switch-over symbol before the symbol for the PSFCH resource. As shown in FIG. 15, symbols between the symbols used for transmitting an SL PRS and the transmission/reception switch-over symbol for the PSFCH may be used for transmitting a PSSCH, that is, a 4th symbol to a 10th symbol may be used for transmitting the PSSCH.

In some embodiments, a resource pool (such as a dedicated resource pool) may include a first type of slot and a second type of slot. The first type of slot includes a PSFCH resource, that is, the first type of slot is a slot in which the PSFCH resource exists. The second type of slot does not include a PSFCH resource, that is, the second type of slot is a slot in which no PSFCH resource exists. Slot structures of the first type of slot and the second type of slot may be different from each other. A quantity of symbols and/or a location of a symbol used for transmitting an SL PRS in the first type of slot may be different from a quantity of symbols and/or a location of a symbol used for transmitting an SL PRS in the second type of slot, as shown in FIG. 15. For example, the quantity of symbols used for transmitting an SL PRS in the first type of slot is different from the quantity of symbols used for transmitting an SL PRS in the second type of slot. In another example, the location of the symbol used for transmitting an SL PRS in the first type of slot is different from the location of the symbol used for transmitting an SL PRS in the second type of slot.

In some embodiments, configuration signalling for a resource pool may include one or more of the following configuration information: a quantity of OFDM symbols that may be used for transmitting an SL PRS in the slot in which the PSFCH is located, and a location of the OFDM symbol in the slot. The OFDM symbol may be not adjacent to the transmission/reception switch-over symbol before the symbol for the PSFCH resource in the slot.

In some embodiments, it may be learned from the foregoing description that, the first conflict indication information may be used to indicate a conflict with a transmit resource, or may be used to indicate a conflict with a reserved resource. If a conflict indication for a transmit resource for an SL PRS is allowed to be transmitted, and a conflict indication for a reserved resource for an SL PRS is also allowed to be transmitted in the resource pool, different conflict indications may be distinguished through different PSFCH resources, that is, a PSFCH resource used to indicate a conflict with a transmit resource may be different from a PSFCH resource used to indicate a conflict with a reserved resource. The first terminal device may determine a type of a conflict depending on different PSFCH resources. If the conflict is a conflict with a transmit resource, the first terminal device may retransmit an SL PRS. If the conflict is a conflict with a reserved resource, the first terminal device may reselect an SL PRS resource.

In some embodiments, a frequency domain resource of a PSFCH resource that is used to indicate a conflict with a transmit resource may be different from a frequency domain resource of a PSFCH resource that is used to indicate a conflict with a reserved resource. For example, in a case that the first SL PRS resource is a transmit resource for an SL PRS, a frequency domain resource of the first PSFCH resource is a first frequency domain resource. In a case that the first SL PRS resource is a reserved resource for an SL PRS, a frequency domain resource of the first PSFCH resource is a second frequency domain resource, where the first frequency domain resource is different from the second frequency domain resource.

In some embodiments, the first frequency domain resource and the second frequency domain resource may belong to different frequency domain resource sets.

For example, the first frequency domain resource belongs to a first frequency domain resource set, the second frequency domain resource belongs to a second frequency domain resource set, and the first frequency domain resource set does not overlap with the second frequency domain resource set. In other words, in any frequency domain resource set, there is no PSFCH that carries another resource conflict indication information. The second terminal device may select a frequency domain resource from different frequency domain resource sets according to actual needs.

The frequency domain resource set may be a PRB set, or may be an RB set. A smaller allocation granularity of frequency domain resources indicates higher resource utilization. The frequency domain resource set may be configured by using separate signalling.

In some embodiments, whether the terminal device can receive a resource conflict indication may be indicated by SCI. For example, whether the terminal device can receive a resource conflict indication may be indicated by a least significant bit (LSB) in a reserved bit field in first-stage SCI. A value of the LSB in the reserved bit field is not specifically limited in embodiments of this application. When the value of the LSB in the reserved bit field is a first value, it indicates that the terminal device can receive a resource conflict indication. In some embodiments, the first value may be any value, for example, 0 or 1. In some other embodiments, the first value is 1.

In some embodiments, the second terminal device may determine whether to transmit the first conflict indication information to the target terminal device, without considering the value of the LSB in the reserved bit field in the first-stage SCI, and the second terminal device may assume that all terminal devices support receiving the first conflict indication information.

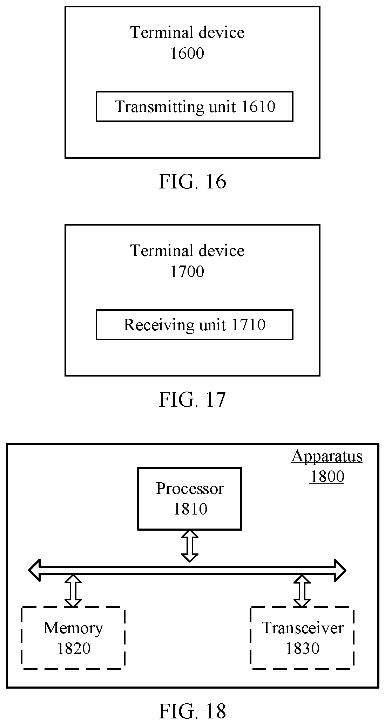

The method embodiments of this application are described above in detail with reference to FIG. 1 to FIG. 15. Apparatus embodiments of this application are described below in detail with reference to FIG. 16 to FIG. 18. It should be understood that the descriptions of the method embodiments correspond to descriptions of the apparatus embodiments, and therefore, for parts that are not described in detail, reference may be made to the foregoing method embodiments.

FIG. 16 is a schematic block diagram of a terminal device according to an embodiment of this application. The terminal device 1600 shown in FIG. 16 may be any type of second terminal device described above. The terminal device 1600 may include a transmitting unit 1610.

The transmitting unit 1610 is configured to: in a case that there is a conflict with a first SL PRS resource indicated by a first terminal device, transmit first conflict indication information to a target terminal device, where the target terminal device is the first terminal device or a third terminal device, and the third terminal device is a terminal device whose sidelink transmission resource conflicts with the first SL PRS resource.

In some embodiments, if the first condition is met, there is a conflict with the first SL PRS resource, and the first condition is determined based on one or more of the following: whether the first SL PRS resource overlaps with the sidelink transmission resource for the third terminal device; a signal measurement result based on first SCI, where the first SCI is used to indicate the first SL PRS resource; a signal measurement result based on second SCI, where the second SCI is used to indicate the sidelink transmission resource for the third terminal device; or whether the second terminal device expects to perform a reception operation on the first SL PRS resource.

In some embodiments, the first condition includes one or more of the following: the first SL PRS resource overlaps with the sidelink transmission resource for the third terminal device, and the signal measurement result based on the second SCI is greater than or equal to a first preset threshold; the first SL PRS resource overlaps with the sidelink transmission resource for the third terminal device, and a difference between the signal measurement result based on the second SCI and the signal measurement result based on the first SCI is greater than or equal to a second preset threshold; or the second terminal device does not expect to perform a reception operation on the first SL PRS resource.

In some embodiments, if the first SL PRS resource is a transmit resource for an SL PRS, the first condition is determined based on a signal measurement result on the transmit resource.

In some embodiments, the first condition includes the signal measurement result on the transmit resource being less than or equal to a third preset threshold.

In some embodiments, the target terminal device is determined based on first information. The first information is related to one or more of the following information: whether the second terminal device expects to perform a reception operation on the first SL PRS resource; a type of the first SL PRS resource; a target receiving terminal of an SL PRS transmitted on the first SL PRS resource; first SCI used to indicate the first SL PRS resource; second SCI used to indicate the sidelink transmission resource for the third terminal device; or a transmission opportunity for transmitting the first conflict indication information.

In some embodiments, the first information includes one or more of the following: whether only the target receiving terminal is allowed to transmit the first conflict indication information to the target terminal device within a resource pool; whether a priority indicated in the first SCI is lower than a priority indicated in the second SCI; whether a time interval between an instant at which the first SCI is received and an instant at which the first conflict indication information is transmitted to the first terminal device is less than or equal to a first preset interval; whether a time interval between an instant at which the second SCI is received and an instant at which the first conflict indication information is transmitted to the third terminal device is less than or equal to a second preset interval; whether a transmission opportunity for transmitting the first conflict indication information to the first terminal device is valid; or whether a transmission opportunity for transmitting the first conflict indication information to the second terminal device is valid.

In some embodiments, if the second condition is met, the target terminal device is the first terminal device, where the second condition includes one or more of the following: the second terminal device does not expect to perform a reception operation on the first SL PRS resource; or the first SL PRS resource is a transmit resource for an SL PRS.

In some embodiments, the first conflict indication information is transmitted in a case in which a third condition is met, and the third condition is determined based on one or more of the following: whether the second terminal device is a target receiving terminal of an SL PRS transmitted on the first SL PRS resource; whether the second terminal device expects to perform a reception operation on the first SL PRS resource; or a transmission opportunity for transmitting the first conflict indication information.

In some embodiments, the third condition includes one or more of the following: the second terminal device is a target receiving terminal of an SL PRS transmitted on the first SL PRS resource; the second terminal device does not expect to perform a reception operation on the first SL PRS resource; a transmission opportunity for transmitting the first conflict indication information is valid; the second terminal device is not required to perform a reception operation in a time unit used for transmitting the first conflict indication information; or a transmission operation that the second terminal device is required to perform in a time unit used for transmitting the first conflict indication information does not exceed a capability of the second terminal device.

In some embodiments, the first conflict indication information is carried in the first PSFCH resource.

In some embodiments, the first SL PRS resource is a resource in a dedicated resource pool, and the first PSFCH resource belongs to resources in the dedicated resource pool.

In some embodiments, a frequency domain resource size of the first PSFCH resource is less than a frequency domain resource size of the resource in the dedicated resource pool.

In some embodiments, a frequency domain resource of the first PSFCH resource is configured by a network device, or a frequency domain resource of the first PSFCH resource is pre-configured.

In some embodiments, the dedicated resource pool includes a first type of slot and a second type of slot, the first type of slot includes a PSFCH resource, the second type of slot includes no PSFCH resource, a quantity of symbols used for transmitting an SL PRS in the first type of slot is different from a quantity of symbols used for transmitting an SL PRS in the second type of slot, and/or a location of a symbol used for transmitting an SL PRS in the first type of slot is different from a location of a symbol used for transmitting an SL PRS in the second type of slot.

In some embodiments, in a case that the first SL PRS resource is a transmit resource for an SL PRS, a frequency domain resource of the first PSFCH resource is a first frequency domain resource; and in a case that the first SL PRS resource is a reserved resource for an SL PRS, a frequency domain resource of the first PSFCH resource is a second frequency domain resource, where the first frequency domain resource is different from the second frequency domain resource.

In some embodiments, the first frequency domain resource belongs to a first frequency domain resource set, the second frequency domain resource belongs to a second frequency domain resource set, and the first frequency domain resource set does not overlap with the second frequency domain resource set.

In some embodiments, the first SL PRS resource is a transmit resource for an SL PRS, and in a case that the second terminal device fails to receive the SL PRS on the first SL PRS resource, the first PSFCH resource is determined based on a terminal source ID indicated in SCI corresponding to a reserved resource for the SL PRS.

In some embodiments, the first SL PRS resource is indicated by first SCI, and the first SCI includes first-stage SCI and/or second-stage SCI.

In some embodiments, in a case that the first SL PRS resource is a reserved resource for an SL PRS, and the target terminal device is the first terminal device, the first conflict indication information is used to instruct the first terminal device to reselect a reserved resource for the SL PRS.

In some embodiments, in a case that the first SL PRS resource is a transmit resource for an SL PRS, and the target terminal device is the first terminal device, the first conflict indication information is used to instruct the first terminal device to retransmit the SL PRS.

FIG. 17 is a schematic block diagram of a terminal device according to an embodiment of this application. The terminal device 1700 shown in FIG. 17 may be any target terminal device described above, such as the first terminal device or the third terminal device. The terminal device 1700 may include a receiving unit 1710.

The receiving unit 1710 is configured to receive first conflict indication information transmitted by a second terminal device, where the first conflict indication information is transmitted in a case in which there is a conflict with the first SL PRS resource indicated by a first terminal device, where the target terminal device is the first terminal device or a third terminal device, and the third terminal device is a terminal device whose sidelink transmission resource conflicts with the first SL PRS resource.

In some embodiments, if the first condition is met, there is a conflict with the first SL PRS resource, and the first condition is determined based on one or more of the following: whether the first SL PRS resource overlaps with the sidelink transmission resource for the third terminal device; a signal measurement result based on first SCI, where the first SCI is used to indicate the first SL PRS resource; a signal measurement result based on second SCI, where the second SCI is used to indicate the sidelink transmission resource for the third terminal device; or whether the second terminal device expects to perform a reception operation on the first SL PRS resource.

In some embodiments, the first condition includes one or more of the following: the first SL PRS resource overlaps with the sidelink transmission resource for the third terminal device, and the signal measurement result based on the second SCI is greater than or equal to a first preset threshold; the first SL PRS resource overlaps with the sidelink transmission resource for the third terminal device, and a difference between the signal measurement result based on the second SCI and the signal measurement result based on the first SCI is greater than or equal to a second preset threshold; or the second terminal device does not expect to perform a reception operation on the first SL PRS resource.

In some embodiments, if the first SL PRS resource is a transmit resource for an SL PRS, the first condition is determined based on a signal measurement result on the transmit resource.

In some embodiments, the first condition includes the signal measurement result on the transmit resource being less than or equal to a third preset threshold.

In some embodiments, the target terminal device is determined based on first information. The first information is related to one or more of the following information: whether the second terminal device expects to perform a reception operation on the first SL PRS resource; a type of the first SL PRS resource; a target receiving terminal of an SL PRS transmitted on the first SL PRS resource; first SCI used to indicate the first SL PRS resource; second SCI used to indicate the sidelink transmission resource for the third terminal device; or a transmission opportunity for transmitting the first conflict indication information.

In some embodiments, the first information includes one or more of the following: whether only the target receiving terminal is allowed to transmit the first conflict indication information to the target terminal device within a resource pool; whether a priority indicated in the first SCI is lower than a priority indicated in the second SCI; whether a time interval between an instant at which the first SCI is received and an instant at which the first conflict indication information is transmitted to the first terminal device is less than or equal to a first preset interval; whether a time interval between an instant at which the second SCI is received and an instant at which the first conflict indication information is transmitted to the third terminal device is less than or equal to a second preset interval; whether a transmission opportunity for transmitting the first conflict indication information to the first terminal device is valid; or whether a transmission opportunity for transmitting the first conflict indication information to the second terminal device is valid.

In some embodiments, if the second condition is met, the target terminal device is the first terminal device, where the second condition includes one or more of the following: the second terminal device does not expect to perform a reception operation on the first SL PRS resource; the first SL PRS resource is a transmit resource for an SL PRS.

In some embodiments, the first conflict indication information is transmitted in a case in which a third condition is met, and the third condition is determined based on one or more of the following: whether the second terminal device is a target receiving terminal of an SL PRS transmitted on the first SL PRS resource; whether the second terminal device expects to perform a reception operation on the first SL PRS resource; or a transmission opportunity for transmitting the first conflict indication information.

In some embodiments, the third condition includes one or more of the following: the second terminal device is a target receiving terminal of an SL PRS transmitted on the first SL PRS resource; the second terminal device does not expect to perform a reception operation on the first SL PRS resource; a transmission opportunity for transmitting the first conflict indication information is valid; the second terminal device is not required to perform a reception operation in a time unit used for transmitting the first conflict indication information; or a transmission operation that the second terminal device is required to perform in a time unit used for transmitting the first conflict indication information does not exceed a capability of the second terminal device.

In some embodiments, the first conflict indication information is carried in the first PSFCH resource.

In some embodiments, the first SL PRS resource is a resource in a dedicated resource pool, and the first PSFCH resource belongs to resources in the dedicated resource pool.

In some embodiments, a frequency domain resource size of the first PSFCH resource is less than a frequency domain resource size of the resource in the dedicated resource pool.

In some embodiments, a frequency domain resource of the first PSFCH resource is configured by a network device, or a frequency domain resource of the first PSFCH resource is pre-configured.

In some embodiments, the dedicated resource pool includes a first type of slot and a second type of slot, the first type of slot includes a PSFCH resource, the second type of slot includes no PSFCH resource, a quantity of symbols used for transmitting an SL PRS in the first type of slot is different from a quantity of symbols used for transmitting an SL PRS in the second type of slot, and/or a location of a symbol used for transmitting an SL PRS in the first type of slot is different from a location of a symbol used for transmitting an SL PRS in the second type of slot.

In some embodiments, in a case that the first SL PRS resource is a transmit resource for an SL PRS, a frequency domain resource of the first PSFCH resource is a first frequency domain resource; and in a case that the first SL PRS resource is a reserved resource for an SL PRS, a frequency domain resource of the first PSFCH resource is a second frequency domain resource, where the first frequency domain resource is different from the second frequency domain resource.

In some embodiments, the first frequency domain resource belongs to a first frequency domain resource set, the second frequency domain resource belongs to a second frequency domain resource set, and the first frequency domain resource set does not overlap with the second frequency domain resource set.

In some embodiments, the first SL PRS resource is a transmit resource for an SL PRS, and in a case that the second terminal device fails to receive the SL PRS on the first SL PRS resource, the first PSFCH resource is determined based on a terminal source ID indicated in SCI corresponding to a reserved resource for the SL PRS.

In some embodiments, the first SL PRS resource is indicated by first SCI, and the first SCI includes first-stage SCI and/or second-stage SCI.

In some embodiments, in a case that the first SL PRS resource is a reserved resource for an SL PRS, and the target terminal device is the first terminal device, the first conflict indication information is used to instruct the first terminal device to reselect a reserved resource for the SL PRS.

In some embodiments, in a case that the first SL PRS resource is a transmit resource for an SL PRS, and the target terminal device is the first terminal device, the first conflict indication information is used to instruct the first terminal device to retransmit the SL PRS.

FIG. 18 is a schematic structural diagram of an apparatus according to an embodiment of this application. Dashed lines in FIG. 18 indicate that a unit or module is optional. The apparatus 1800 may be configured to implement the methods described in the foregoing method embodiments. The apparatus 1800 may be a chip, a terminal device, such as the first terminal device, the second terminal device, or the third terminal device as described above.

The apparatus 1800 may include one or more processors 1810. The processor 1810 may support the apparatus 1800 in implementing the methods described in the foregoing method embodiments. The processor 1810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1800 may further include one or more memories 1820. The memory 1820 stores a program that may be executed by the processor 1810 to cause the processor 1810 to perform the methods described in the foregoing method embodiments. The memory 1820 may be separate from the processor 1810 or may be integrated into the processor 1810.

The apparatus 1800 may further include a transceiver 1830. The processor 1810 may communicate with another device or chip through the transceiver 1830. For example, the processor 1810 may transmit data to and receive data from another device or chip through the transceiver 1830.

An embodiment of this application further provides a computer-readable storage medium for storing a program. The computer-readable storage medium may be applied to the terminal or the network device provided in the embodiments of this application, and the program causes a computer to perform the methods performed by the terminal or the network device in various embodiments of this application.

An embodiment of this application further provides a computer program product. The computer program product includes a program. The computer program product may be applied to the terminal or the network device provided in the embodiments of this application, and the program causes a computer to perform the methods performed by the terminal or the network device in various embodiments of this application.

An embodiment of this application further provides a computer program. The computer program may be applied to the terminal or the network device provided in embodiments of this application, and the computer program causes a computer to execute the methods performed by the terminal or the network device in various embodiments of this application.

It should be understood that, in embodiments of this application, "B that is corresponding to A" means that B is associated with A, and B may be determined based on A. However, it should be further understood that, determining B based on A does not mean determining B based only on A, but instead, B may be determined based on A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of the embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A wireless communication method, comprising:

   in a case that there is a conflict with a first sidelink positioning reference signal SL PRS resource indicated by a first terminal device, transmitting, by a second terminal device, first conflict indication information to a target terminal device,
   wherein the target terminal device is the first terminal device or a third terminal device, and the third terminal device is a terminal device whose sidelink transmission resource conflicts with the first SL PRS resource.

2. The method according to claim 1, wherein in a case that a first condition is met, there is a conflict with the first SL PRS resource, and the first condition is determined based on one or more of following:

   whether the first SL PRS resource overlaps with the sidelink transmission resource for the third terminal device;
   a signal measurement result based on first sidelink control information SCI, wherein the first SCI is used to indicate the first SL PRS resource;
   a signal measurement result based on second SCI, wherein the second SCI is used to indicate the sidelink transmission resource for the third terminal device; or
   whether the second terminal device expects to perform a reception operation on the first SL PRS resource.

3. The method according to claim 2, wherein the first condition comprises one or more of following:

   the first SL PRS resource overlaps with the sidelink transmission resource for the third terminal device, and the signal measurement result based on the second SCI is greater than or equal to a first preset threshold;
   the first SL PRS resource overlaps with the sidelink transmission resource for the third terminal device, and a difference between the signal measurement result based on the second SCI and the signal measurement result based on the first SCI is greater than or equal to a second preset threshold; or
   the second terminal device does not expect to perform a reception operation on the first SL PRS resource.

4. The method according to claim 2 or 3, wherein in a case that the first SL PRS resource is a transmit resource for an SL PRS, the first condition is determined based on a signal measurement result on the transmit resource.

5. The method according to claim 4, wherein the first condition comprises the signal measurement result on the transmit resource being less than or equal to a third preset threshold.

6. The method according to any one of claims 1 to 5, wherein the target terminal device is determined based on first information, and the first information is related to one or more of following information:

   whether the second terminal device expects to perform a reception operation on the first SL PRS resource;
   a type of the first SL PRS resource;
   a target receiving terminal of an SL PRS transmitted on the first SL PRS resource;
   first SCI used to indicate the first SL PRS resource;
   second SCI used to indicate the sidelink transmission resource for the third terminal device; or
   a transmission opportunity for transmitting the first conflict indication information.

7. The method according to claim 6, wherein the first information comprises one or more of following:

whether only the target receiving terminal is allowed to transmit the first conflict indication information to the target terminal device within a resource pool;

whether a priority indicated in the first SCI is lower than a priority indicated in the second SCI;

whether a time interval between an instant at which the first SCI is received and an instant at which the first conflict indication information is transmitted to the first terminal device is less than or equal to a first preset interval;

whether a time interval between an instant at which the second SCI is received and an instant at which the first conflict indication information is transmitted to the third terminal device is less than or equal to a second preset interval;

whether a transmission opportunity for transmitting the first conflict indication information to the first terminal device is valid; or

whether a transmission opportunity for transmitting the first conflict indication information to the second terminal device is valid.

8. The method according to claim 6 or 7, wherein in a case that a second condition is met, the target terminal device is the first terminal device,

wherein the second condition comprises one or more of following:

the second terminal device does not expect to perform a reception operation on the first SL PRS resource; or
the first SL PRS resource is a transmit resource for an SL PRS.

9. The method according to any one of claims 1 to 8, wherein the first conflict indication information is transmitted in a case in which a third condition is met, and the third condition is determined based on one or more of following:

whether the second terminal device is a target receiving terminal of an SL PRS transmitted on the first SL PRS resource;
whether the second terminal device expects to perform a reception operation on the first SL PRS resource; or
a transmission opportunity for transmitting the first conflict indication information.

10. The method according to claim 9, wherein the third condition comprises one or more of following:

the second terminal device is a target receiving terminal of an SL PRS transmitted on the first SL PRS resource;
the second terminal device does not expect to perform a reception operation on the first SL PRS resource;
a transmission opportunity for transmitting the first conflict indication information is valid;
the second terminal device is not required to perform a reception operation in a time unit used for transmitting the first conflict indication information; or
a transmission operation that the second terminal device is required to perform in a time unit used for transmitting the first conflict indication information does not exceed a capability of the second terminal device.

11. The method according to any one of claims 1 to 10, wherein the first conflict indication information is carried in a first physical sidelink feedback channel PSFCH resource.

12. The method according to claim 11, wherein the first SL PRS resource is a resource in a dedicated resource pool, and the first PSFCH resource belongs to resources in the dedicated resource pool.

13. The method according to claim 12, wherein a frequency domain resource size of the first PSFCH resource is less than a frequency domain resource size of the resource in the dedicated resource pool.

14. The method according to claim 13, wherein a frequency domain resource of the first PSFCH resource is configured by a network device, or a frequency domain resource of the first PSFCH resource is pre-configured.

15. The method according to any one of claims 12 to 14, wherein the dedicated resource pool comprises a first type of slot and a second type of slot, the first type of slot comprises a PSFCH resource, the second type of slot comprises no PSFCH resource, a quantity of symbols used for transmitting an SL PRS in the first type of slot is different from a quantity of symbols used for transmitting an SL PRS in the second type of slot, and/or a location of a symbol used for transmitting an SL PRS in the first type of slot is different from a location of a symbol used for transmitting an SL PRS in the second type of slot.

16. The method according to any one of claims 12 to 15, wherein in a case that the first SL PRS resource is a transmit resource for an SL PRS, a frequency domain resource of the first PSFCH resource is a first frequency domain resource; and in a case that the first SL PRS resource is a reserved resource for an SL PRS, a frequency domain resource of the first PSFCH resource is a second frequency domain resource, wherein the first frequency domain resource is different from the second frequency domain resource.

17. The method according to claim 16, wherein the first frequency domain resource belongs to a first frequency domain resource set, the second frequency domain resource belongs to a second frequency domain resource set, and the first frequency domain resource set does not overlap with the second frequency domain resource set.

18. The method according to any one of claims 1 to 17, wherein the first SL PRS resource is a transmit resource for an SL PRS, and in a case that the second terminal device fails to receive the SL PRS on the first SL PRS resource, the first PSFCH resource is determined based on a terminal source ID indicated in SCI corresponding to a reserved resource for the SL PRS.

19. The method according to any one of claims 1 to 18, wherein the first SL PRS resource is indicated by first SCI, and the first SCI comprises first-stage SCI and/or second-stage SCI.

20. The method according to any one of claims 1 to 19, wherein in a case that the first SL PRS resource is a reserved resource for an SL PRS, and the target terminal device is the first terminal device, the first conflict indication information is used to instruct the first terminal device to reselect a reserved resource for the SL PRS.

21. The method according to any one of claims 1 to 19, wherein in a case that the first SL PRS resource is a transmit resource for an SL PRS, and the target terminal device is the first terminal device, the first conflict indication information is used to instruct the first terminal device to retransmit the SL PRS.

22. A wireless communication method, comprising:

receiving, by a target terminal device, first conflict indication information transmitted by a second terminal device, wherein the first conflict indication information is transmitted in a case in which there is a conflict with first sidelink positioning reference signal SL PRS resource indicated by a first terminal device, wherein the target terminal device is the first terminal device or a third terminal device, and the third terminal device is a terminal device whose sidelink transmission resource conflicts with the first SL PRS resource.

23. The method according to claim 22, wherein in a case that a first condition is met, there is a conflict with the first SL PRS resource, and the first condition is determined based on one or more of following:

whether the first SL PRS resource overlaps with the sidelink transmission resource for the third terminal device;
a signal measurement result based on first sidelink control information SCI, wherein the first SCI is used to indicate the first SL PRS resource;
a signal measurement result based on second SCI, wherein the second SCI is used to indicate the sidelink transmission resource for the third terminal device; or
whether the second terminal device expects to perform a reception operation on the first SL PRS resource.

24. The method according to claim 23, wherein the first condition comprises one or more of following:

the first SL PRS resource overlaps with the sidelink transmission resource for the third terminal device, and the signal measurement result based on the second SCI is greater than or equal to a first preset threshold;
the first SL PRS resource overlaps with the sidelink transmission resource for the third terminal device, and a difference between the signal measurement result based on the second SCI and the signal measurement result based on the first SCI is greater than or equal to a second preset threshold; or
the second terminal device does not expect to perform a reception operation on the first SL PRS resource.

25. The method according to claim 23 or 24, wherein in a case that the first SL PRS resource is a transmit resource for an SL PRS, the first condition is determined based on a signal measurement result on the transmit resource.

26. The method according to claim 25, wherein the first condition comprises the signal measurement result on the transmit resource being less than or equal to a third preset threshold.

27. The method according to any one of claims 22 to 26, wherein the target terminal device is determined based on first information, and the first information is related to one or more of following information:

whether the second terminal device expects to perform a reception operation on the first SL PRS resource;
a type of the first SL PRS resource;
a target receiving terminal of an SL PRS transmitted on the first SL PRS resource;
first SCI used to indicate the first SL PRS resource;
second SCI used to indicate the sidelink transmission resource for the third terminal device; or
a transmission opportunity for transmitting the first conflict indication information.

28. The method according to claim 27, wherein the first information comprises one or more of following information:

whether only the target receiving terminal is allowed to transmit the first conflict indication information to the target terminal device within a resource pool;
whether a priority indicated in the first SCI is lower than a priority indicated in the second SCI;
whether a time interval between an instant at which the first SCI is received and an instant at which the first conflict indication information is transmitted to the first terminal device is less than or equal to a first preset interval;
whether a time interval between an instant at which the second SCI is received and an instant at which the first conflict indication information is transmitted to the third terminal device is less than or equal to a second preset interval;
whether a transmission opportunity for transmitting the first conflict indication information to the first terminal device is valid; or
whether a transmission opportunity for transmitting the first conflict indication information to the second terminal device is valid.

29. The method according to claim 27 or 28, wherein in a case that a second condition is met, the target terminal device is the first terminal device,
wherein the second condition comprises one or more of following:

the second terminal device does not expect to perform a reception operation on the first SL PRS resource;
the first SL PRS resource is a transmit resource for an SL PRS.

30. The method according to any one of claims 22 to 29, wherein the first conflict indication information is transmitted in a case in which a third condition is met, and the third condition is determined based on one or more of following:

whether the second terminal device is a target receiving terminal of an SL PRS transmitted on the first SL PRS resource;
whether the second terminal device expects to perform a reception operation on the first SL PRS resource; or
a transmission opportunity for transmitting the first conflict indication information.

31. The method according to claim 30, wherein the third condition comprises one or more of following:

the second terminal device is a target receiving terminal of an SL PRS transmitted on the first SL PRS resource;
the second terminal device does not expect to perform a reception operation on the first SL PRS resource;
a transmission opportunity for transmitting the first conflict indication information is valid;
the second terminal device is not required to perform a reception operation in a time unit used for transmitting the first conflict indication information; or
a transmission operation that the second terminal device is required to perform in a time unit used for transmitting the first conflict indication information does not exceed a capability of the second terminal device.

32. The method according to any one of claims 22 to 31, wherein the first conflict indication information is carried in a first physical sidelink feedback channel PSFCH resource.

33. The method according to claim 32, wherein the first SL PRS resource is a resource in a dedicated resource pool, and the first PSFCH resource belongs to resources in the dedicated resource pool.

34. The method according to claim 33, wherein a frequency domain resource size of the first PSFCH resource is less than a frequency domain resource size of the resource in the dedicated resource pool.

35. The method according to claim 34, wherein a frequency domain resource of the first PSFCH resource is configured by a network device, or a frequency domain resource of the first PSFCH resource is pre-configured.

36. The method according to any one of claims 33 to 35, wherein the dedicated resource pool comprises a first type of slot and a second type of slot, the first type of slot comprises a PSFCH resource, the second type of slot comprises no PSFCH resource, a quantity of symbols used for transmitting an SL PRS in the first type of slot is different from a quantity of symbols used for transmitting an SL PRS in the second type of slot, and/or a location of a symbol used for transmitting an SL PRS in the first type of slot is different from a location of a symbol used for transmitting an SL PRS in the second type of slot.

37. The method according to any one of claims 33 to 36, wherein in a case that the first SL PRS resource is a transmit resource for an SL PRS, a frequency domain resource of the first PSFCH resource is a first frequency domain resource; and in a case that the first SL PRS resource is a reserved resource for an SL PRS, a frequency domain resource of the first PSFCH resource is a second frequency domain resource, wherein the first frequency domain resource is different from the second frequency domain resource.

38. The method according to claim 37, wherein the first frequency domain resource belongs to a first frequency domain resource set, the second frequency domain resource belongs to a second frequency domain resource set, and the first frequency domain resource set does not overlap with the second frequency domain resource set.

39. The method according to any one of claims 22 to 38, wherein the first SL PRS resource is a transmit resource for an SL PRS, and in a case that the second terminal device fails to receive the SL PRS on the first SL PRS resource, the first PSFCH resource is determined based on a terminal source ID indicated in SCI corresponding to a reserved resource for the SL PRS.

40. The method according to any one of claims 22 to 39, wherein the first SL PRS resource is indicated by first SCI, and the first SCI comprises first-stage SCI and/or second-stage SCI.

41. The method according to any one of claims 22 to 40, wherein in a case that the first SL PRS resource is a reserved resource for an SL PRS, and the target terminal device is the first terminal device, the first conflict indication information is used to instruct the first terminal device to reselect a reserved resource for the SL PRS.

42. The method according to any one of claims 22 to 40, wherein in a case that the first SL PRS resource is a transmit resource for an SL PRS, and the target terminal device is the first terminal device, the first conflict indication information is used to instruct the first terminal device to retransmit the SL PRS.

43. A terminal device, wherein the terminal device is a second terminal device, and the terminal device comprises:

a transmitting unit, configured to: in a case that there is a conflict with a first sidelink positioning reference signal SL PRS resource indicated by a first terminal device, transmit first conflict indication information to a target terminal device,
wherein the target terminal device is the first terminal device or a third terminal device, and the third terminal device is a terminal device whose sidelink transmission resource conflicts with the first SL PRS resource.

44. The terminal device according to claim 43, wherein in a case that a first condition is met, there is a conflict with the first SL PRS resource, and the first condition is determined based on one or more of following:

whether the first SL PRS resource overlaps with the sidelink transmission resource for the third terminal device;
a signal measurement result based on first sidelink control information SCI, wherein the first SCI is used to indicate the first SL PRS resource;
a signal measurement result based on second SCI, wherein the second SCI is used to indicate the sidelink transmission resource for the third terminal device; or
whether the second terminal device expects to perform a reception operation on the first SL PRS resource.

45. The terminal device according to claim 44, wherein the first condition comprises one or more of following:

the first SL PRS resource overlaps with the sidelink transmission resource for the third terminal device, and the signal measurement result based on the second SCI is greater than or equal to a first preset threshold;

the first SL PRS resource overlaps with the sidelink transmission resource for the third terminal device, and a difference between the signal measurement result based on the second SCI and the signal measurement result based on the first SCI is greater than or equal to a second preset threshold; or

the second terminal device does not expect to perform a reception operation on the first SL PRS resource.

46. The terminal device according to claim 44 or 45, wherein in a case that the first SL PRS resource is a transmit resource for an SL PRS, the first condition is determined based on a signal measurement result on the transmit resource.

47. The terminal device according to claim 46, wherein the first condition comprises the signal measurement result on the transmit resource being less than or equal to a third preset threshold.

48. The terminal device according to any one of claims 43 to 47, wherein the target terminal device is determined based on first information, and the first information is related to one or more of following information:

whether the second terminal device expects to perform a reception operation on the first SL PRS resource;
a type of the first SL PRS resource;
a target receiving terminal of an SL PRS transmitted on the first SL PRS resource;
first SCI used to indicate the first SL PRS resource;
second SCI used to indicate the sidelink transmission resource for the third terminal device; or
a transmission opportunity for transmitting the first conflict indication information.

49. The terminal device according to claim 48, wherein the first information comprises one or more of following information:

whether only the target receiving terminal is allowed to transmit the first conflict indication information to the target terminal device within a resource pool;
whether a priority indicated in the first SCI is lower than a priority indicated in the second SCI;
whether a time interval between an instant at which the first SCI is received and an instant at which the first conflict indication information is transmitted to the first terminal device is less than or equal to a first preset interval;
whether a time interval between an instant at which the second SCI is received and an instant at which the first conflict indication information is transmitted to the third terminal device is less than or equal to a second preset interval;
whether a transmission opportunity for transmitting the first conflict indication information to the first terminal device is valid; or
whether a transmission opportunity for transmitting the first conflict indication information to the second terminal device is valid.

50. The terminal device according to claim 48 or 49, wherein in a case that a second condition is met, the target terminal device is the first terminal device,
wherein the second condition comprises one or more of following:

the second terminal device does not expect to perform a reception operation on the first SL PRS resource;
the first SL PRS resource is a transmit resource for an SL PRS.

51. The terminal device according to any one of claims 43 to 50, wherein the first conflict indication information is transmitted in a case in which a third condition is met, and the third condition is determined based on one or more of following:

whether the second terminal device is a target receiving terminal of an SL PRS transmitted on the first SL PRS resource;
whether the second terminal device expects to perform a reception operation on the first SL PRS resource;
a transmission opportunity for transmitting the first conflict indication information.

52. The terminal device according to claim 51, wherein the third condition comprises one or more of following:

the second terminal device is a target receiving terminal of an SL PRS transmitted on the first SL PRS resource;
the second terminal device does not expect to perform a reception operation on the first SL PRS resource;
a transmission opportunity for transmitting the first conflict indication information is valid;

the second terminal device is not required to perform a reception operation in a time unit used for transmitting the first conflict indication information; or

a transmission operation that the second terminal device is required to perform in a time unit used for transmitting the first conflict indication information does not exceed a capability of the second terminal device.

53. The terminal device according to any one of claims 43 to 52, wherein the first conflict indication information is carried in a first physical sidelink feedback channel PSFCH resource.

54. The terminal device according to claim 53, wherein the first SL PRS resource is a resource in a dedicated resource pool, and the first PSFCH resource belongs to resources in the dedicated resource pool.

55. The terminal device according to claim 54, wherein a frequency domain resource size of the first PSFCH resource is less than a frequency domain resource size of the resource in the dedicated resource pool.

56. The terminal device according to claim 55, wherein a frequency domain resource of the first PSFCH resource is configured by a network device, or a frequency domain resource of the first PSFCH resource is pre-configured.

57. The terminal device according to any one of claims 54 to 56, wherein the dedicated resource pool comprises a first type of slot and a second type of slot, the first type of slot comprises a PSFCH resource, the second type of slot comprises no PSFCH resource, a quantity of symbols used for transmitting an SL PRS in the first type of slot is different from a quantity of symbols used for transmitting an SL PRS in the second type of slot, and/or a location of a symbol used for transmitting an SL PRS in the first type of slot is different from a location of a symbol used for transmitting an SL PRS in the second type of slot.

58. The terminal device according to any one of claims 54 to 57, wherein in a case that the first SL PRS resource is a transmit resource for an SL PRS, a frequency domain resource of the first PSFCH resource is a first frequency domain resource; and in a case that the first SL PRS resource is a reserved resource for an SL PRS, a frequency domain resource of the first PSFCH resource is a second frequency domain resource, wherein the first frequency domain resource is different from the second frequency domain resource.

59. The terminal device according to claim 58, wherein the first frequency domain resource belongs to a first frequency domain resource set, the second frequency domain resource belongs to a second frequency domain resource set, and the first frequency domain resource set does not overlap with the second frequency domain resource set.

60. The terminal device according to any one of claims 43 to 59, wherein the first SL PRS resource is a transmit resource for an SL PRS, and in a case that the second terminal device fails to receive the SL PRS on the first SL PRS resource, the first PSFCH resource is determined based on a terminal source ID indicated in SCI corresponding to a reserved resource for the SL PRS.

61. The terminal device according to any one of claims 43 to 60, wherein the first SL PRS resource is indicated by first SCI, and the first SCI comprises first-stage SCI and/or second-stage SCI.

62. The terminal device according to any one of claims 43 to 61, wherein in a case that the first SL PRS resource is a reserved resource for an SL PRS, and the target terminal device is the first terminal device, the first conflict indication information is used to instruct the first terminal device to reselect a reserved resource for the SL PRS.

63. The terminal device according to any one of claims 43 to 61, wherein in a case that the first SL PRS resource is a transmit resource for an SL PRS, and the target terminal device is the first terminal device, the first conflict indication information is used to instruct the first terminal device to retransmit the SL PRS.

64. A terminal device, wherein the terminal device is a target terminal device, and the terminal device comprises:

a receiving unit, configured to receive first conflict indication information transmitted by a second terminal device, wherein the first conflict indication information is transmitted in a case in which there is a conflict with first sidelink positioning reference signal SL PRS resource indicated by a first terminal device,
wherein the target terminal device is the first terminal device or a third terminal device, and the third terminal device is a terminal device whose sidelink transmission resource conflicts with the first SL PRS resource.

**65.** The terminal device according to claim 64, wherein in a case that a first condition is met, there is a conflict with the first SL PRS resource, and the first condition is determined based on one or more of following:

whether the first SL PRS resource overlaps with the sidelink transmission resource for the third terminal device; a signal measurement result based on first sidelink control information SCI, wherein the first SCI is used to indicate the first SL PRS resource; a signal measurement result based on second SCI, wherein the second SCI is used to indicate the sidelink transmission resource for the third terminal device; or whether the second terminal device expects to perform a reception operation on the first SL PRS resource.

**66.** The terminal device according to claim 65, wherein the first condition comprises one or more of following:

the first SL PRS resource overlaps with the sidelink transmission resource for the third terminal device, and the signal measurement result based on the second SCI is greater than or equal to a first preset threshold; the first SL PRS resource overlaps with the sidelink transmission resource for the third terminal device, and a difference between the signal measurement result based on the second SCI and the signal measurement result based on the first SCI is greater than or equal to a second preset threshold; or the second terminal device does not expect to perform a reception operation on the first SL PRS resource.

**67.** The terminal device according to claim 65 or 66, wherein in a case that the first SL PRS resource is a transmit resource for an SL PRS, the first condition is determined based on a signal measurement result on the transmit resource.

**68.** The terminal device according to claim 67, wherein the first condition comprises the signal measurement result on the transmit resource being less than or equal to a third preset threshold.

**69.** The terminal device according to any one of claims 64 to 68, wherein the target terminal device is determined based on first information, and the first information is related to one or more of following information:

whether the second terminal device expects to perform a reception operation on the first SL PRS resource; a type of the first SL PRS resource; a target receiving terminal of an SL PRS transmitted on the first SL PRS resource; first SCI used to indicate the first SL PRS resource; second SCI used to indicate the sidelink transmission resource for the third terminal device; or a transmission opportunity for transmitting the first conflict indication information.

**70.** The terminal device according to claim 69, wherein the first information comprises one or more of following information:

whether only the target receiving terminal is allowed to transmit the first conflict indication information to the target terminal device within a resource pool; whether a priority indicated in the first SCI is lower than a priority indicated in the second SCI; whether a time interval between an instant at which the first SCI is received and an instant at which the first conflict indication information is transmitted to the first terminal device is less than or equal to a first preset interval; whether a time interval between an instant at which the second SCI is received and an instant at which the first conflict indication information is transmitted to the third terminal device is less than or equal to a second preset interval; whether a transmission opportunity for transmitting the first conflict indication information to the first terminal device is valid; or whether a transmission opportunity for transmitting the first conflict indication information to the second terminal device is valid.

**71.** The terminal device according to claim 69 or 70, wherein in a case that a second condition is met, the target terminal device is the first terminal device, wherein the second condition comprises one or more of following:

the second terminal device does not expect to perform a reception operation on the first SL PRS resource; or the first SL PRS resource is a transmit resource for an SL PRS.

72. The terminal device according to any one of claims 64 to 71, wherein the first conflict indication information is transmitted in a case in which a third condition is met, and the third condition is determined based on one or more of following:

whether the second terminal device is a target receiving terminal of an SL PRS transmitted on the first SL PRS resource;
whether the second terminal device expects to perform a reception operation on the first SL PRS resource; or
a transmission opportunity for transmitting the first conflict indication information.

73. The terminal device according to claim 72, wherein the third condition comprises one or more of following:

the second terminal device is a target receiving terminal of an SL PRS transmitted on the first SL PRS resource;
the second terminal device does not expect to perform a reception operation on the first SL PRS resource;
a transmission opportunity for transmitting the first conflict indication information is valid;
the second terminal device is not required to perform a reception operation in a time unit used for transmitting the first conflict indication information; or
a transmission operation that the second terminal device is required to perform in a time unit used for transmitting the first conflict indication information does not exceed a capability of the second terminal device.

74. The terminal device according to any one of claims 64 to 73, wherein the first conflict indication information is carried in a first physical sidelink feedback channel PSFCH resource.

75. The terminal device according to claim 74, wherein the first SL PRS resource is a resource in a dedicated resource pool, and the first PSFCH resource belongs to resources in the dedicated resource pool.

76. The terminal device according to claim 75, wherein a frequency domain resource size of the first PSFCH resource is less than a frequency domain resource size of the resource in the dedicated resource pool.

77. The terminal device according to claim 76, wherein a frequency domain resource of the first PSFCH resource is configured by a network device, or a frequency domain resource of the first PSFCH resource is pre-configured.

78. The terminal device according to any one of claims 75 to 77, wherein the dedicated resource pool comprises a first type of slot and a second type of slot, the first type of slot comprises a PSFCH resource, the second type of slot comprises no PSFCH resource, a quantity of symbols used for transmitting an SL PRS in the first type of slot is different from a quantity of symbols used for transmitting an SL PRS in the second type of slot, and/or a location of a symbol used for transmitting an SL PRS in the first type of slot is different from a location of a symbol used for transmitting an SL PRS in the second type of slot.

79. The terminal device according to any one of claims 75 to 78, wherein in a case that the first SL PRS resource is a transmit resource for an SL PRS, a frequency domain resource of the first PSFCH resource is a first frequency domain resource; and in a case that the first SL PRS resource is a reserved resource for an SL PRS, a frequency domain resource of the first PSFCH resource is a second frequency domain resource, wherein the first frequency domain resource is different from the second frequency domain resource.

80. The terminal device according to claim 79, wherein the first frequency domain resource belongs to a first frequency domain resource set, the second frequency domain resource belongs to a second frequency domain resource set, and the first frequency domain resource set does not overlap with the second frequency domain resource set.

81. The terminal device according to any one of claims 64 to 80, wherein the first SL PRS resource is a transmit resource for an SL PRS, and in a case that the second terminal device fails to receive the SL PRS on the first SL PRS resource, the first PSFCH resource is determined based on a terminal source ID indicated in SCI corresponding to a reserved resource for the SL PRS.

82. The terminal device according to any one of claims 64 to 81, wherein the first SL PRS resource is indicated by first SCI, and the first SCI comprises first-stage SCI and/or second-stage SCI.

83. The terminal device according to any one of claims 64 to 82, wherein in a case that the first SL PRS resource is a reserved resource for an SL PRS, and the target terminal device is the first terminal device, the first conflict indication information is used to instruct the first terminal device to reselect a reserved resource for the SL PRS.

84. The terminal device according to any one of claims 64 to 82, wherein in a case that the first SL PRS resource is a transmit resource for an SL PRS, and the target terminal device is the first terminal device, the first conflict indication information is used to instruct the first terminal device to retransmit the SL PRS.

85. A terminal device, comprising a memory and a processor, wherein the memory is configured to store a program, and the processor is configured to invoke the program in the memory, to cause the terminal device to perform the method according to any one of claims 1 to 21 or 22 to 42.

86. An apparatus, comprising a processor, configured to call a program from a memory to cause the apparatus to perform the method according to any one of claims 1 to 21, or to cause the apparatus to perform the method according to any one of claims 22 to 42.

87. A chip, comprising a processor, configured to call a program from a memory to cause a device on which the chip is installed to perform the method according to any one of claims 1 to 21, or to cause a device on which the chip is installed to perform the method according to any one of claims 22 to 42.

88. A computer-readable storage medium storing a program, wherein the program causes a computer to perform the method according to any one of claims 1 to 21, or causes a computer to perform the method according to any one of claims 22 to 42.

89. A computer program product, comprising a program, wherein the program causes a computer to perform the method according to any one of claims 1 to 21, or causes a computer to perform the method according to any one of claims 22 to 42.

90. A computer program, wherein the computer program causes a computer to perform the method according to any one of claims 1 to 21, or causes a computer to perform the method according to any one of claims 22 to 42.

110

**100**

120

FIG. 1

110

120a    Sidelink
        communication    120a

FIG. 2

110

120a    Sidelink        120b
        communication

FIG. 3

120b          120b

Sidelink
communication

FIG. 4

**Communication
group**

Terminal
device 1

Resource
allocation     Resource
allocation

Terminal
device 2             Terminal
device 3

Sidelink
communication

FIG. 5

Resource
selection window      Listening window

Time
domain

n-T0        n   n+T1        n+T2

FIG. 6

Terminal device 2

Terminal device 6

Terminal device 3

**Terminal device 1**

Terminal device 5

Terminal device 4

FIG. 7

Terminal device 1        Terminal device 2

Sidelink data

FIG. 8

**Communication group**

Terminal device 2

Terminal device 1

Terminal device 3

Terminal device 4

FIG. 9

FIG. 10

FIG. 11

FIG. 12

FIG. 13

FIG. 14

Transmission/reception switch-over symbol

OFDM symbol that may be used for an SL PRS

Slot where there is no PSFCH resource

Transmission/reception switch-over symbol

First conflict indication

PSFCH

AGC symbol

Transmission/reception switch-over symbol

Slot where there is a PSFCH resource

OFDM symbol that may be used for an SL PRS

FIG. 15

Terminal device
1600

Transmitting unit 1610

FIG. 16

Terminal device
1700

Receiving unit 1710

FIG. 17

Apparatus
1800

Processor
1810

Memory
1820

Transceiver
1830

FIG. 18

## INTERNATIONAL SEARCH REPORT

| International application No. |
| --- |
| **PCT/CN2022/129577** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, CJFD, ENTXT, 3GPP: 侧行链路, 旁路, 旁通链路, 资源, 冲突, 碰撞, 指示, 终端, 设备; sidelink, SL, resource, conflict, indicate

**C. DOCUMENTS CONSIDERED TO BE RELEVANT**

| Category* | Citation of document, with indication, where appropriate, of the relevant passages | Relevant to claim No. |
| --- | --- | --- |
| X | CN 114915391 A (VIVO COMMUNICATION TECHNOLOGY CO., LTD.) 16 August 2022 (2022-08-16) description, paragraphs 59-425, and claims 1-39 | 1-90 |
| A | CN 109691146 A (BEIJING XIAOMI MOBILE SOFTWARE CO., LTD.) 26 April 2019 (2019-04-26) entire document | 1-90 |
| A | CN 112235765 A (GOHIGH DATA NETWORKS TECHNOLOGY CO., LTD.) 15 January 2021 (2021-01-15) entire document | 1-90 |
| A | CN 112840586 A (BEIJING XIAOMI MOBILE SOFTWARE CO., LTD.) 25 May 2021 (2021-05-25) entire document | 1-90 |
| A | CN 114125939 A (HUAWEI TECHNOLOGIES CO., LTD.) 01 March 2022 (2022-03-01) entire document | 1-90 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 July 2023** | **20 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2022/129577** |

**C.    DOCUMENTS CONSIDERED TO BE RELEVANT**

| Category* | Citation of document, with indication, where appropriate, of the relevant passages | Relevant to claim No. |
|---|---|---|
| A | QUALCOMM INCORPORATED. "Reliability and Latency Enhancements for Mode 2" *3GPP TSG RAN WG1 Meeting #104-e R1-210191*, 29 January 2021 (2021-01-29), entire document | 1-90 |

Form PCT/ISA/210 (second sheet) (July 2022)

## INTERNATIONAL SEARCH REPORT
### Information on patent family members

International application No.

**PCT/CN2022/129577**

| Patent document cited in search report | | | Publication date (day/month/year) | Patent family member(s) | | | Publication date (day/month/year) |
|---|---|---|---|---|---|---|---|
| CN | 114915391 | A | 16 August 2022 | None | | | |
| CN | 109691146 | A | 26 April 2019 | US | 2022030598 | A1 | 27 January 2022 |
| | | | | WO | 2020107349 | A1 | 04 June 2020 |
| | | | | EP | 3890371 | A1 | 06 October 2021 |
| | | | | EP | 3890371 | A4 | 06 July 2022 |
| CN | 112235765 | A | 15 January 2021 | None | | | |
| CN | 112840586 | A | 25 May 2021 | None | | | |
| CN | 114125939 | A | 01 March 2022 | None | | | |

Form PCT/ISA/210 (patent family annex) (July 2022)